# EUROPEAN PATENT APPLICATION

(11) **EP 4 187 381 A1**
(43) Date of publication of application: **31.05.2023**
(21) Application number: 22202186.7
(22) Date of filing: 18.10.2022
(51) Int. Cl.: G06F 9/455, G06F 8/52

(54) **ENABLING A HOST PASSTHROUGH BASED ON A HARDWARE IDENTIFICATION INSTRUCTION**

(30) Priority: 24.11.2021 US 202117535458
(71) Applicant: INTEL Corporation, Santa Clara, CA 95054 (US)
(72) Inventor: Rajendran, Jaishankar, 560016 Bengaluru (IN); Nakajima, Jun, San Ramon, 94583 (US); Kodali, Prashant, 560035 Bangalore (IN); Sakarda, Premanand, Acton, 01720 (US); Lv, Zhiyuan, Beijing, 100190 (CN); Shankar, Vaibhav, Hillsboro, 97124 (US)
(74) Representative: Goddar, Heinz J.

(57) **Abstract**

Techniques and mechanisms for a host passthrough to be performed based on the execution of a hardware identification instruction with a virtual machine (VM). In an embodiment, a hypervisor process sets a value of a control parameter corresponding to a resource of the VM. The control parameter indicates whether the VM resource is authorized to avail of a host passthrough functionality of a processor which executes the hypervisor process. The control parameter is evaluated, based on a central processing unit identification (CPUID) instruction of a guest operating system which is executed with the VM, to determine whether the CPUID instruction is to result in a host passthrough or a VM exit. In another embodiment, a shared memory resource is searched to determine whether execution of the CPUID instruction is to retrieve information without the use of either the host passthrough or the VM exit.

## Description

### BACKGROUND

### 1. Technical Field

The present disclosure pertains to the field of data processing, and more particularly, to the field of virtualizing resources in data processing systems.

### 2. Background Art

Generally, the concept of virtualization of resources in data processing systems allows multiple instances of one or more operating systems (each, an "OS") to run on a single data processing system, even though each OS is designed to have complete, direct control over the system and its resources. Virtualization is typically implemented by using software (e.g., a virtual machine monitor, or a "VMM") to present to each OS a "virtual machine" (a "VM") having virtual resources that the OS completely and directly controls, while the VMM maintains a system environment for implementing virtualization policies such as sharing and/or allocating the physical resources among the VMs (the "virtualization environment"). Each OS, and any other software, that runs on a VM, unaware of the virtualization environment, is referred to as a "guest" or as "guest software," while a "host" or "host software" is software, such as a VMM, that runs outside of, and is not necessarily completely aware of, the virtualization environment.

A processor in various data processing systems support virtualization, for example, by variously operating in either of two modes including a "root" mode in which software runs directly on the hardware, outside of any virtualization environment, and a "non-root" mode in which software runs at its intended privilege level, but within a virtualization environment hosted by a VMM running in root mode. In a virtualization environment, certain events, operations, and situations, such as external interrupts or attempts to access privileged registers or resources, are "intercepted," i.e., cause the processor to exit the virtualization environment so that the VMM operates, for example, to implement virtualization policies. Such a processor supports instructions for establishing, entering, exiting, and maintaining a virtualization environment, and includes register bits or other structures that indicate or control virtualization capabilities of the processor.

### BRIEF DESCRIPTION OF THE DRAWINGS

The various embodiments of the present invention are illustrated by way of example, and not by way of limitation, in the figures of the accompanying drawings and in which:
FIG. 1 shows a functional block diagram illustrating features of a virtualization architecture to conditionally perform a host passthrough according to an embodiment.
FIG. 2A shows a flow diagram illustrating features of a method to determine an availability of a host passthrough functionality to a virtual machine according to an embodiment.
FIG. 2B shows a flow diagram illustrating features of a method to enable a virtual machine to avail of a host passthrough according to an embodiment.
FIG. 3 shows a flow diagram illustrating features of a method to perform operations based on a hardware identification instruction of a virtual machine according to an embodiment.
FIG. 4 shows a functional block diagram illustrating features of a virtualization architecture to conditionally perform a host passthrough according to an embodiment.
FIG. 5 shows a functional block diagram illustrating features of a virtualization architecture to execute a hardware identification instruction with a virtual machine according to an embodiment.
FIG. 6 shows a functional block diagram illustrating features of a virtualization architecture to conditionally enable host passthroughs according to an embodiment.
FIGs. 7A through 7B are block diagrams illustrating a generic vector friendly instruction format and instruction templates thereof according to embodiments of the invention.
FIGs. 8A through 8D are block diagrams illustrating an exemplary specific vector friendly instruction format according to embodiments of the invention.
FIG. 9 is a block diagram of a register architecture according to one embodiment of the invention.
FIG. 10A is a block diagram illustrating both an exemplary in-order pipeline and an exemplary register renaming, out-of-order issue/execution pipeline according to embodiments of the invention.
FIG. 10B is a block diagram illustrating both an exemplary embodiment of an in-order architecture core and an exemplary register renaming, out-of-order issue/execution architecture core to be included in a processor according to embodiments of the invention.
FIGs. 11A through 11B illustrate a block diagram of a more specific exemplary in-order core architecture, which core would be one of several logic blocks (including other cores of the same type and/or different types) in a chip.
FIG. 12 is a block diagram of a processor that may have more than one core, may have an integrated memory controller, and may have integrated graphics according to embodiments of the invention.
FIGs. 13 through 16 are block diagrams of exemplary computer architectures.
FIG. 17 is a block diagram contrasting the use of a software instruction converter to convert binary instructions in a source instruction set to binary instructions in a target instruction set according to embodiments of the invention.

### DETAILED DESCRIPTION

Embodiments discussed herein variously provide techniques and mechanisms for a host passthrough to be conditionally performed based on a hardware identification instruction which is to be executed with a virtual machine. In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultramobile personal computers, wired telephones, combinations thereof, and the like. More generally, the technologies described herein may be employed in any of a variety of electronic devices including a processor which supports virtualization functionality.

As used herein, "virtual machine" (or "VM") refers to a process which emulates physical hardware that, for example, is to run one or more programs, deploy apps and/or the like. In a typical scenario, one or more virtual "guest" machines run on a physical "host" machine - e.g., wherein some or all such one or more virtual machines each run its own operating system, and functions separately from any other VM.

As used herein, "hypervisor," "virtual machine manager" (or "VMM"), and related terms variously refer to a process which emulates or otherwise presents a virtual machine, and which manages an execution of a guest OS with said virtual machine.

As used herein, "VM exit" refers to a switch - e.g., by physical processor hardware or a virtual processor - from a context for VM (guest) operations to a different context for VMM (host) operations. A VM exit is performed, for example, based on any of various privileged instruction, exceptions, interrupts, mode set register (MSR) reads etc.

In general, a VM exit includes or otherwise depends on processor logic saving a snapshot of a VM's state at the time of the VM exit. Such VM state is subsequently reacquired with the processor logic when, for example, the processor logic is to reenter the VM context. VM exits and reentries include or are otherwise associated with performance overhead - e.g., including saving guest state and controls, reloading host state/controls, saving later host state/controls, and reloading guest state/controls - which are often a source of significant performance degradation in a virtualized system. To mitigate such overhead, some embodiment variously provide hardware resources and/or software resources to enable a host passthrough based on an instruction which is to communicate information describing one or more hardware characteristics of a processor.

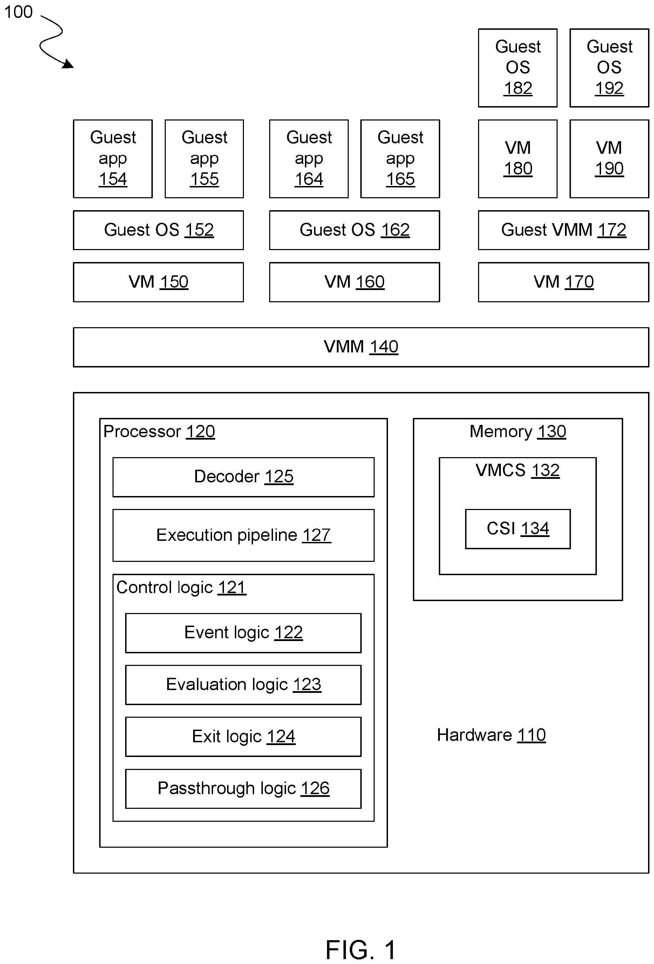

FIG. 1 illustrates features of a virtualization architecture 100 to conditionally perform a host passthrough according to an embodiment. Virtualization architecture 100 illustrates one example of an embodiment wherein a hardware platform supports functionality to execute a hardware identification instruction with a virtual machine (VM) - e.g., wherein such execution comprises or otherwise results in a conditional performance of a VM exit (or alternatively, foregoing said VM exit) based on whether a VM resource is authorized to avail of a host passthrough.

As shown in FIG. 1, virtualization architecture 100 comprises a bare platform hardware 110 (e.g., that of a personal computer, mainframe computer, portable computer, handheld device, set-top box, or any other suitable computing system) which includes processor 120 and memory 130. Hardware 110 comprises a data processing apparatus capable of executing any of various suitable OSes and/or VMM software. Processor 120 is, for example, any type of processor, including a general purpose microprocessor, such as a processor in the Core^{™}, Xeon^{™}, or other processor family from Intel Corporation, or another processor from another company, or a digital signal processor or microcontroller. Although FIG. 1 shows only one such processor 120, hardware 110 includes any number of processors, in various embodiments. Memory 130 is, for example, static or dynamic random-access memory, semiconductor-based read only or flash memory, magnetic or optical disk memory, any other type of medium readable by processor 120, or any combination of such mediums. Hardware 110 also includes any number of input/output or other devices (not shown), in some embodiments.

In this embodiment, processor 120 supports execution of a hypervisor process, such as the illustrative virtual machine monitor (VMM) 140 shown. VMM 140 is a "root mode host" because it runs in root mode on processor 120. VMM 140 comprises any of various suitable software, firmware, or hardware host installed to run on, or accessible to, hardware 110, to present one or more virtual machines (VMs), i.e., abstractions of hardware 110, to guests, or to otherwise create VMs, manage VMs, and implement virtualization policies within a virtualization environment supported by virtualization architecture 100. In other embodiments, a root mode host is any suitable monitor, hypervisor, OS, or other software, firmware, or hardware capable of controlling hardware 110.

A guest comprises any OS, any VMM, including another instance of VMM 140, any hypervisor, or any application or other software. Each guest expects to access physical resources, such as processor and platform registers, memory, and input/output devices, of hardware 110, according to the architecture of the processor and the platform presented in the VM. FIG. 1 shows VMs 150, 160, 170, 180, and 190, with guest OS 152 and guest applications 154 and 155 installed to run on VM 150, guest OS 162 and guest applications 164 and 165 installed to run on VM 160, guest VMM 172 installed to run on VM 170, guest OS 182 installed to run on VM 180, and guest OS 192 installed to run on VM 190. In this embodiment, all guests run in non-root mode. Although FIG. 1 shows five VMs and nine guests, any number of VMs are created and any number of guests installed to run on each VM within the scope of the present invention.

Although some embodiments are not limited in this regard, virtualization architecture 100 is "layered" or "recursive" because, in this example, it allows one VMM (e.g., VMM 140) to host another hypervisor process, such as VMM 172, as a guest. In other embodiments, VMM 140 does not provide for any such guest hypervisor process. In virtualization architecture 100, VMM 140 is the host of the virtualization environment including VMs 150, 160 and 170, and is not a guest in any virtualization environment because it is installed to run on hardware 110 with no "intervening" monitor between it and hardware 110. An "intervening" monitor is a monitor, such as VMM 172, that hosts a guest, such as guest OS 182, but is also a guest itself. VMM 172 is the host of the virtualization environment including VMs 180 and 190, but is also a guest in the virtualization environment hosted by VMM 140. An intervening monitor (e.g., VMM 172) is referred to herein as a parent guest, because it functions as both a parent to another VM (or hierarchy of VMs) and as a guest of an underlying VMM (e.g., VMM 140 is a parent of VMM 172 which is a parent to guests 182 and 192).

A monitor, such as VMM 140, is referred to as the "parent" of a guest, such as guest OSs 152, 162, guest applications 154, 155, 164, 165, and guest VMM 172, if there are no intervening monitors between it and the guest. The guest is referred to as the "child" of that monitor. A guest is both a child and a parent, in some embodiments. For example, guest VMM 172 is a child of VMM 140 and the parent of guest OS 182 and guest OS 192.

A resource that can be accessed by a guest is classified either as a "privileged" or a "non-privileged" resource. For a privileged resource, a host (e.g., VMM 140) facilitates the functionality desired by the guest while retaining ultimate control over the resource. Non-privileged resources do not need to be controlled by the host and are accessed directly by a guest.

Furthermore, each guest OS expects to handle various events such as exceptions (e.g., page faults, and general protection faults), interrupts (e.g., hardware interrupts and software interrupts), and platform events (e.g., initialization and system management interrupts). These exceptions, interrupts, and platform events are referred to collectively and individually as "events" herein. Some of these events are "privileged" because they are to be handled by a host to ensure proper operation of VMs, protection of the host from guests, and protection of guests from each other.

At a given time, processor 120 is executing instructions from VMM 140 or any guest, thus VMM 140 or the guest is active and running on, or in control of, processor 120. When a privileged event occurs or a guest attempts to access a privileged resource, control is transferred from the guest to VMM 140. The transfer of control from a guest to a host is referred to as a "VM exit" herein. After handling the event or facilitating the access to the resource appropriately, VMM 140 returns control to a guest. The transfer of control from a host to a guest is referred to as a "VM entry" herein.

In the embodiment of FIG. 1, processor 120 controls the operation of VMs according to data stored in virtual machine control structure ("VMCS") 132. VMCS 132 is a structure that contains state of a guest or guests, state of VMM 140, execution control information indicating how VMM 140 is to control operation of a guest or guests, information regarding VM exits and VM entries, any other such information. Processor 120 reads information from VMCS 132 to determine the execution environment of a VM and constrain its behavior. In this embodiment, VMCS 132 is stored in memory 130. In an embodiment, VMCS 132 is divided into multiple structures, each corresponding to a respective one host or one guest, where (for example) each such structure considered an independent VMCS.

The "guest hierarchy" of a VMM is the stack of software installed to run within the virtualization environment or environments supported by the VMM. Some embodiments comprise and/or facilitate operation of a virtualization architecture in which guest hierarchies include chains of pointers between VMCSs. These pointers are referred to as "parent pointers" when pointing from the VMCS of a child to the VMCS of a parent, and as "child pointers" when pointing from the VMCS of a parent to the VMCS of a child.

In an embodiment, processor 120 includes control logic 121 to support virtualization, including virtualization event processing in a virtualization architecture. Control logic 121 is implemented, for example, in microcode, programmable logic, hard-coded logic, or any other form of control logic within processor 120. In other embodiments, control logic 121 is implemented in any form of hardware, software, or firmware, such as a processor abstraction layer, within a processor or within any device accessible or medium readable by a processor, such as memory 130.

To facilitate execution of one or more processes of virtualization architecture 100, processor 120 comprises a decoder 125 to decode one or more instructions, and an execution pipeline 127 to variously execute the decoded one or more instructions. In an embodiment, processor 120 provides an instruction set architecture (ISA) to accommodate such execution - e.g., wherein the ISA includes a hardware identification instruction. As used herein, "hardware identification instruction" refers to an instruction which, when executed, is to retrieve information which identifies any of various hardware characteristics of processor 120. In this particular context, "hardware characteristic" refers to a characteristic of circuitry and/or other hardware, wherein said characteristic is independent of (and, for example, persists regardless of) a given state of software execution with said hardware.

By way of illustration and not limitation, a hardware identification instruction is to be executed to identify a manufacturer ID string, a stepping level, a model, a family, a thread, core, cache topology, and/or other such characteristics of a processor. In one such embodiment, a hardware identification instruction comprises a central processor unit identification (CPUID) instruction of an Intel x86 ISA - e.g., wherein the instruction is to retrieve information such as that which is accessible, for example, using the EAX, EBX, ECX, EDX registers of an Intel x86 architecture.

In existing technologies, the execution of a hardware identification instruction with a VM is, or otherwise includes, a privileged event which requires a VM exit to facilitate secure communication of hardware characteristic information to the VM using a hypervisor process. Some embodiments improve upon these existing technologies by modifying, extending or otherwise providing a host passthrough functionality which avoids the need for such a VM exit.

For example, control logic 121 (or other suitable logic of processor 120) is operable to advertise or otherwise identify to a hypervisor processes - such as VMM 140, or guest VMM 172 - that a passthrough functionality is available for use based on a hardware identification instruction. Based on such identification, VMM 140 (or other such hypervisor process) makes a determination as to whether a given resource of a VM - e.g., the VM itself, a virtual processor of the VM, a process executed with the VM, or the like - is to be authorized to avail of said passthrough functionality.

Based on the determination, VMM 140 signals hardware of processor 120 to store configuration state information which specifies or otherwise indicates whether a particular one of a VM exit or a host passthrough is to be performed for a hardware identification instruction (if any) which is to be executed with the VM. By way of illustration and not limitation, configuration state information (CSI) 134 is stored to VMCS 132 and/or any of various other suitable repositories which are available to VMM 140 (and, for example, available to a VM which is provided with VMM 140). In an embodiment, CSI 134 comprises one or more configuration values which each correspond to a different respective one or more VMs. The one or more configuration values each identify whether the corresponding one or more VMS are to avail of host passthrough functionality for the execution of hardware identification instructions.

For example, control logic 121 and/or other suitable circuitry of processor 120 causes or otherwise facilitates the performance of one or more methods - e.g., wherein different embodiments variously include, are based on, and/or enable (at least in part) some or all such one or more methods. In the embodiment shown, control logic 121 comprises event logic 122 which is operable to recognize that an instruction, which is to be (or has been) decoded by decoder 125, is a hardware identification instruction of a VM. In one such embodiment, evaluation logic 123 of control logic 121 determines, based on CSI 134, whether execution of such a hardware identification instruction is to include or otherwise result in a VM exit (or alternatively, is to result in a host passthrough).

For example, where CSI 134 indicates that a VM resource is authorized to avail of a host passthrough functionality, execution pipeline 127 operates with passthrough logic 126 to communicate hardware characteristics to the VM without the need for a VM exit. Passthrough logic 126 provides functionality to pass low-level hardware information through to a VM without requiring an exit from a flow of the VM to a flow of a hypervisor which provides said VM. In an embodiment, some or all functionality of passthrough logic 126 is adapted from conventional host passthrough techniques and/or methods (which are not detailed herein to avoid obscuring certain features of various embodiments).

By contrast, where CSI 134 indicates that the VM resource is not authorized to avail of the host passthrough functionality, execution pipeline 127 instead operates with exit logic 124 to exit processor 120 from a flow of the VM, so that hardware characteristics can be communicated to the VM using VMM 140. Exit logic 124 provides functionality to exit from a VM or other such guest - e.g., wherein exit logic 124 is to transition processor 120 from performing operations of a guest to performing operations of a host for that guest. In an embodiment, some or all functionality of exit logic 124 is adapted from conventional VM exit techniques and/or methods (which are not detailed herein to avoid obscuring certain features of various embodiments). In an alternative embodiment, execution pipeline 127 includes exit logic 124 and/or passthrough logic 126.

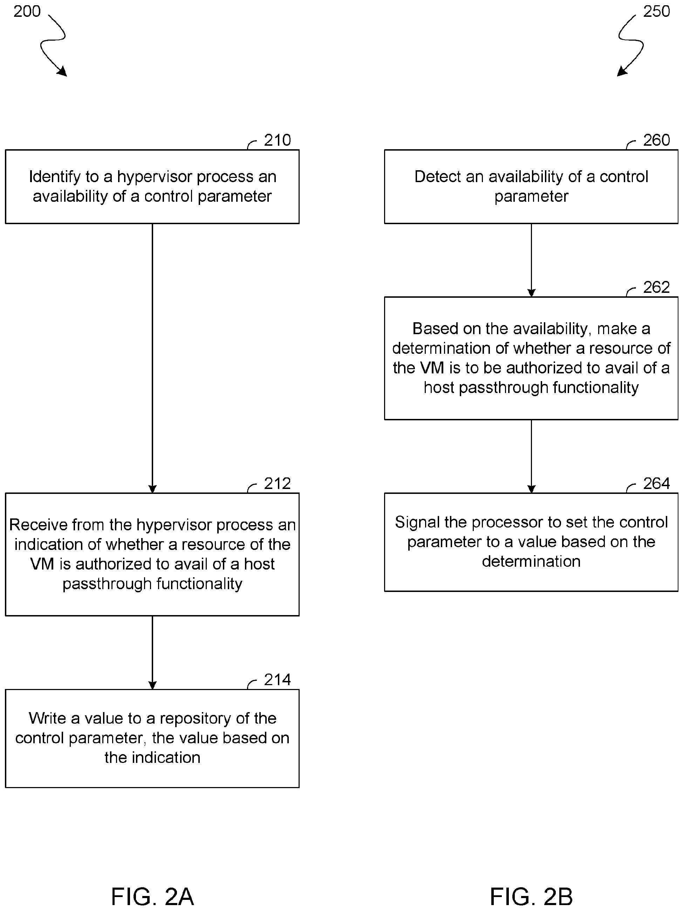

FIG. 2A illustrates features of a method 200 to determine an availability of a host passthrough functionality according to an embodiment. Method 200 illustrates one example of an embodiment wherein a host processor advertises an ability to support a conditional host passthrough for a hardware identification instruction which is executed with a VM. Operations such as those of method 200 are performed, for example, with control logic 121 and/or other suitable circuitry of processor 120.

As shown in FIG. 2A, method 200 comprises (at 210) identifying to a hypervisor process an availability of a control parameter which is to control access to a host passthrough functionality of the processor. For example, the identifying at 210 comprises control logic 121 (or other suitable circuitry of processor 120) signaling to VMM 140 capability information which identifies an ability to support a host passthrough functionality for a hardware identification instruction of a VM. In an embodiment, the identifying at 210 takes place while method 200 (or alternatively, operations performed concurrently with method 200) executes the hypervisor process.

The control parameter is identified at 210 as being available to be associated with one or more VMs, where such association is to determine (at least in part) whether an execution of an instruction, the execution by a given one such VM, is to result in an exit from a running of the VM. For example, the control parameter is to provide a basis for determining whether execution of the instruction is to result in a switch by the processor from a flow of that VM to a flow of the hypervisor process. In an embodiment, execution of the instruction is to identify to the VM a hardware characteristic of the processor - e.g., wherein the instruction is a CPUID instruction of an Intel x86 instruction set.

Referring now to FIG. 2B, method 250 illustrates a process - e.g., executed at least in part with software - which enables a hypervisor process to avail of a host passthrough according to an embodiment. Method 250 illustrates one example of an embodiment wherein a hypervisor process generates configuration state information to control which one of a host passthrough or a VM exit is to be performed based on an execution of a hardware identification instruction with a VM. Operations such as those of method 250 are performed, for example, with VMM 140 or guest VMM 172 - e.g., wherein method 250 is performed with (or alternatively, is part of) method 200.

As shown in FIG. 2B, method 250 comprises (at 260) detecting an availability of a control parameter such as that which is advertised or otherwise identified by circuitry of a processor at 210. For example, the control parameter is made available to the hypervisor process for use in determining whether an execution of a hardware identification instruction - the execution by a VM - is to result in a switch by the processor from a flow of the VM to a flow of a hypervisor process. In one such embodiment, method 250 (or alternatively, software operations of another method) also provides the VM, which is to execute a host operating system.

Based on the availability which is detected at 260, method 250 (at 262) makes a determination of whether a resource of the VM is to be authorized to avail of a host passthrough functionality of the processor. For example, the VM resource is the VM itself, or a particular one or more virtual components (e.g., a virtual processor) of the VM, or a process which is to be executed with the VM. By way of illustration and not limitation, such a process comprises a guest OS, or software which is to run on that guest OS.

In an embodiment, the hypervisor process includes or is otherwise able to access reference information which specifies or otherwise indicates a basis on which the determination at 262 is to be made. For example, such reference information indicates an ability of the VM resource to support one or more operations which are to be performed conditionally to facilitate the execution of a hardware identification instruction. Additionally or alternatively, the reference information indicates (e.g., with a credential, a security capability, an integrity metric, or the like) a level of security which is associated with the VM resource. Additionally or alternatively, the reference information indicates a metric of operational efficiency of the VM resource. In some embodiments, the reference information additionally or alternatively comprises an explicit authorization of the VM resource - e.g., wherein the explicit authorization is provided by a manufacturer, system administrator, software developer or other such agent.

Based on such reference information (and, for example, a predefined criteria for evaluating said reference information) the hypervisor process makes the determination at 262. It is noted that some embodiments are not limited with respect to a particular basis on which, or means by which, such reference information is generated, made available to, and/or evaluated by the hypervisor process.

Method 250 further comprises (at 264) signaling the processor to set the control parameter to a value based on the determination. For example, referring again to FIG. 2A, method 200 further comprises (at 212) processor circuitry receiving from the hypervisor process an indication of whether a resource of the VM is authorized to avail of the host passthrough functionality of the processor. At 214, method 200 writes - to a repository of the control parameter - a value which is based on the indication. For example, the writing at 214 comprises circuitry of processor 120 writing CSI 134 to VMCS 132 (and/or to any of various other suitable memory resources of hardware 110).

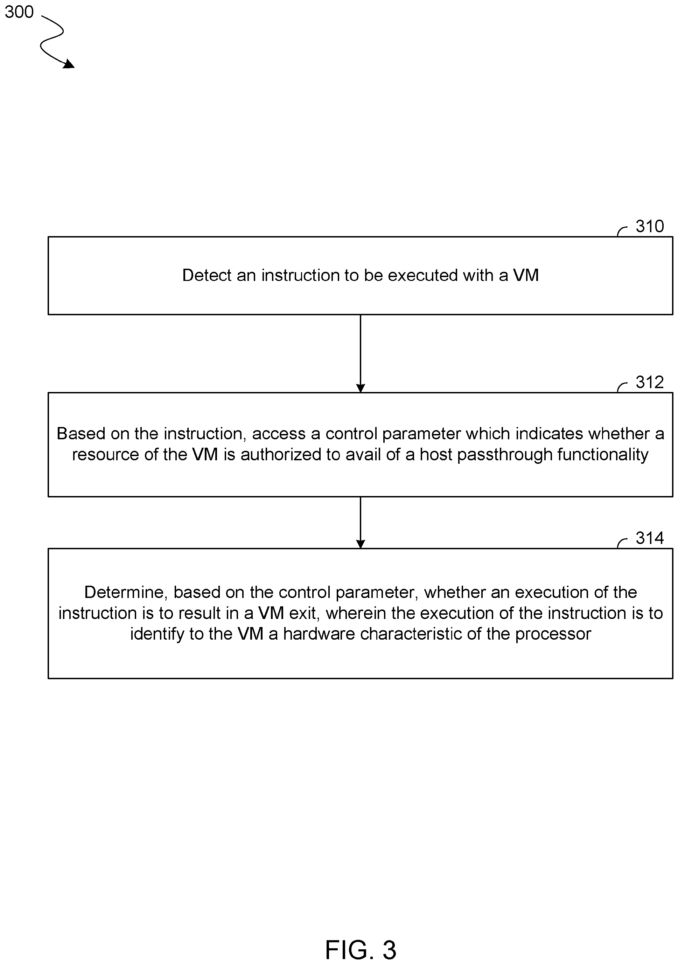

FIG. 3 illustrates features of a method 300 to perform operations based on a hardware identification instruction of a virtual machine according to an embodiment. Method 300 illustrates one example of an embodiment wherein an execution of a hardware identification instruction - e.g., the execution with a guest OS or other suitable process of a VM - conditionally results in one of a host passthrough or a VM exit being performed. Operations such as those of method 300 are performed with one of VMs 150, 160, 170 (for example) - e.g., wherein method 300 includes, is performed with or is otherwise based on one or both od methods 200, 250.

As shown in FIG. 3, method 300 comprises (at 310) detecting an instruction which is to be executed with a VM, wherein the execution of the instruction is to identify to the VM a hardware characteristic of a processor. For example, the instruction is a CPUID instruction of an Intel x86 instruction set, or any of various other suitable hardware identification instructions. In an embodiment, the VM is provided with (e.g., including managed by) a hypervisor process, wherein the circuitry of the processor is to execute the hypervisor process. In one such embodiment, the hypervisor process is a guest hypervisor process, which is provided with a host hypervisor process that is also to be executed with such processor circuitry.

Method 300 further comprises (at 312) accessing a control parameter - the accessing based on the instruction detected at 310 - which corresponds to a resource of the VM (or "VM resource"). In an embodiment, the control parameter (e.g., such as one which is set to a particular value at 214 of method 200) indicates whether the VM resource is authorized to avail of a host passthrough functionality of the processor.

Method 300 further comprises (at 314) determining, based on the control parameter, whether an execution of the instruction is to result in a switch by the processor from a flow of the VM to a flow of the hypervisor process. Although some embodiments are not limited in this regard, the determining at 314 comprises (for example) performing a search of a memory region which is shared by the VM and the hypervisor process. The search is to determine whether a shared table (or one or more other suitable data structures of the memory region) stores information which identifies the hardware characteristic. For example, such a shared memory region, in some embodiments, functions as a type of cache for information which is targeted by hardware identification instructions, and which (for example) was previously retrieved by an earlier hardware identification instruction.

In some embodiments, where it is indicated that the search of such a memory region has failed to find the targeted hardware characteristic information, the determining at 314 further determines, based on the control parameter, whether the VM resource is authorized to avail of the host passthrough functionality. In one such embodiment, where a failure of the search is indicated, and where the VM resource is authorized to avail of the host passthrough functionality, method 300 further signals the processor to communicate the hardware characteristic information to the VM via a host passthrough. Based on such signaling, the execution of the instruction (in some embodiments) results in the hardware characteristic information being stored to the memory region - e.g., in addition to the hardware characteristic information being provided to the VM as a result of such execution.

In another such embodiment, where the failure of the search is indicated, and where the VM resource is unauthorized to avail of the host passthrough functionality, method 300 instead further signals the processor to initiate the switch from the flow of the VM to the flow of the hypervisor process.

Alternatively, in some embodiments, where successful search of such a shared memory region is indicated, method 300 provides a result of the execution based on an access of the hardware characteristic information in the memory region - e.g., wherein the hardware characteristic information is provided to the VM independent of any need to perform either a host passthrough or a VM exit. In still another embodiment, the determining at 314 is performed independent of a search (if any) of such a shared memory region based on the instruction detected at 310.

In some embodiments, the control parameter which is accessed at 312 is further used by another VM (i.e., other than the VM performing method 300) to determine whether an execution of another hardware identification instruction, by that other VM, is to result in a switch by the processor from a flow of that other VM

Additionally or alternatively, method 300 further comprises operations (not shown), similar to those in FIG. 3, which are variously performed each for a different respective one or more other VMs. By way of illustration and not limitation, such additional operations comprise detecting a second hardware identification instruction to be executed with a second VM. The second VM is to be provided with the hypervisor process or, for example, with another hypervisor process which is also to be executed with the same processor circuitry. Based on the second hardware identification instruction, method 300 further accesses a second control parameter which corresponds to a resource of that second VM. In an embodiment, this second control parameter similarly indicates whether the resource of the second VM (or "second VM resource") is authorized to avail of the host passthrough functionality. For example, the second control parameter - like the control parameter accessed at 312 - is made available and set by operations such as those of methods 200, 250. In one such embodiment, based on the second control parameter, additional operations of method 300 determine whether an execution of the second hardware identification instruction is to result in a second switch by the processor from a flow of the second VM to the flow of the hypervisor process.

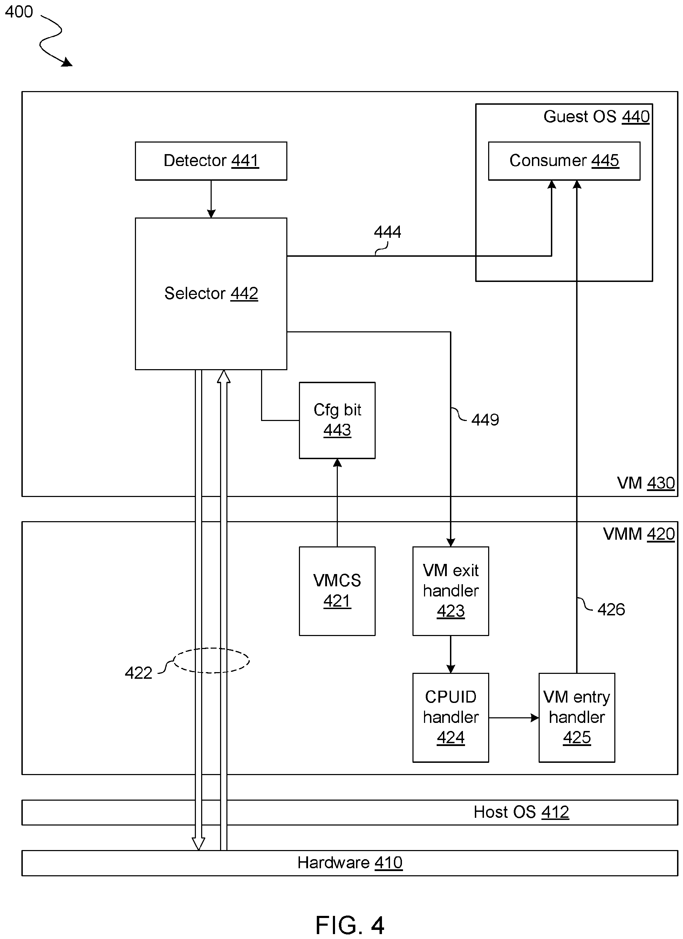

FIG. 4 illustrates features of a virtualization architecture 400 to conditionally perform a host passthrough according to an embodiment. Virtualization architecture 400 illustrates one example of an embodiment which is to execute a hardware identification instruction, resulting in a performance of a selected one of a host passthrough or a VM exit. The selection is according to whether a VM resource is authorized to avail of a host passthrough functionality. In various embodiments, virtualization architecture 400 provides functionality such as that of virtualization architecture 100.

As shown in FIG. 4, virtualization architecture 400 comprises hardware 410 to execute a host OS 412 which is to provide a VMM 420 (or any other suitable hypervisor process). In turn, VMM 420 is to facilitate hardware emulation with one or more VMs including, for example, the illustrative VM 430 shown. VM 430 is to execute a guest OS 440 and, in some embodiments, one or more applications (not shown) which are to run on guest OS 440.

At a given time during operation of virtualization architecture 400, a state of VMM 420 comprises a VMCS 421, a VM exit handler 423, a CPUID handler 424, and a VM entry handler 425. Furthermore, a state of VM 430 comprises a detector 441, and a selector 442 - e.g., wherein the respective states of VMM 420 and VM 430 are variously maintained at memory 130. In one such embodiment, hardware 410, VMM 420, and VM 430, correspond functionally to hardware 110, VMM 140, and VM 150 (respectively) - e.g., wherein guest OS 440 and VMCS 421 provide functionality of guest OS 152 and VMCS 132 (respectively). In an embodiment, VMCS 421, VM exit handler 423, CPUID handler 424, and VM entry handler 425 are implemented each with a respective sub-routine, method call, handler, and/or other suitable resource of VMM 420 - e.g., wherein detector 441, and selector 442 are similarly implemented each with a respective resource of VM 430.

In various embodiments, some or all of method 200 is performed with a processor (not shown) of hardware 410 - e.g., wherein methods 250, 300 are performed VMM 420, and VM 430 (respectively). By way of illustration and not limitation, detector 441 provides functionality to perform a detection (such as that at 310 of method 300) of a CPUID instruction which is to be executed on behalf of guest OS 440. Based on the detected instruction, detector 441 signals selector 442 to access a control parameter (e.g., represented by the illustrative configuration bit 443 shown), such as that which is set to a particular value at 214 of method 200. In the embodiment shown, configuration bit 443 is written or otherwise made available to VM 430 by VMCS 421.

In the case where VMCS 421 indicates that a resource of VM 430 is authorized to avail of a host passthrough functionality, selector 442 participates in a host passthrough 422 whereby hardware characteristic information is communicated to selector 442 (or another suitable resource of VM 430) without the need for processor circuitry to exit from running VM 430. Such hardware characteristic information is communicated (e.g., with signal 444) to a consumer 445 of the information - for example, wherein consumer 445 is an applet, (sub)routine, script or other executing software which includes or otherwise operates based on the CPUID instruction.

By contrast, in an alternative case where VMCS 421 indicates that the resource of VM 430 is not authorized to avail of the host passthrough functionality, selector 442 instead generates a signal 449 to cause a VM exit, wherein hardware 410 switches from running VM 430 to running VMM 420. In an embodiment, signal 449 causes VM exit handler 423 to implement such a VM exit - e.g., wherein VM exit handler 423 causes state of VM 430 to be saved to a memory of hardware 410, and causes other state of VMM 420 (e.g., including state of CPUID handler 424 and VM entry handler 425) to be loaded for execution with the processor of hardware 410. After the VM exit is completed, CPUID handler 424 retrieves hardware characteristic information describing the processor. Subsequently, VM entry handler 425 performs a VM entry to resume a running of VM 430 - e.g., so that the retrieved hardware characteristic information can be communicated (for example, with signal 426) to the consumer 445 of the information.

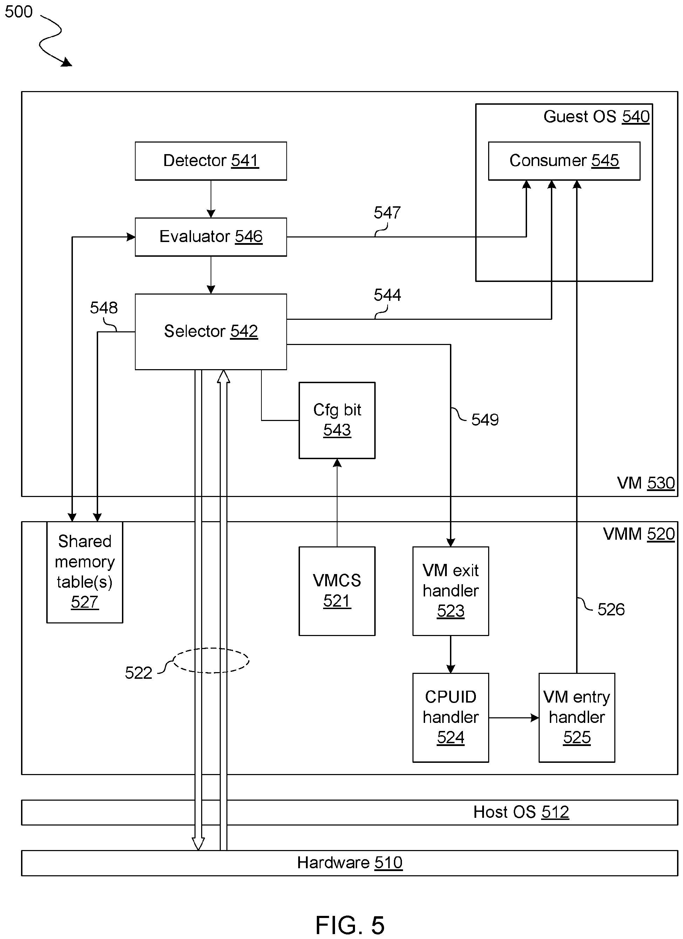

FIG. 5 illustrates features of a virtualization architecture 500 to execute a hardware identification instruction with a virtual machine according to another embodiment. Virtualization architecture 500 illustrates one example of an embodiment wherein the selective performance of one of a host passthrough or a VM exit is further conditioned upon whether information targeted by the hardware identification instruction is already in a memory region which is shared by a VM and a hypervisor process. In various embodiments, virtualization architecture 500 provides functionality such as that of virtualization architecture 100 or virtualization architecture 400 - e.g., wherein some or all of methods 200, 250, 300 are performed with virtualization architecture 500.

As shown in FIG. 5, virtualization architecture 500 comprises hardware 510, wherein a processor (not shown) thereof is to variously facilitate the execution of a host OS 512, a VMM 520, a VM 530, and a guest OS 540. In one such embodiment, hardware 510, host OS 512, VMM 520, VM 530, and guest OS 540 correspond functionally to hardware 410, host OS 412, VMM 420, VM 430, and guest OS 540 (respectively).

By way of illustration and not limitation, VMM 520 comprises or otherwise operates with a VMCS 521, a VM exit handler 523, a CPUID handler 524, and a VM entry handler 525 - e.g., corresponding functionally to VMCS 421, VM exit handler 423, CPUID handler 424, and VM entry handler 425 (respectively). Furthermore, VM 530 comprises or otherwise operates with a detector 541, and a selector 542 which - for example - correspond functionally to detector 441, and selector 442 (respectively). In one such embodiment, some or all of signals 526, 544, 549 are variously provided to a consumer 545 of hardware characteristic information based on respective CPUID instructions - e.g., wherein signals 526, 544, 549 correspond functionally to signals 426, 444, 449 (respectively).

In the example embodiment shown, VMM 520 and VM 530 each have access to a shared memory resource (such as the illustrative one or more shared memory tables 527 shown), wherein VM 530 further comprises an evaluator 546 to access the shared memory table(s) 527 based on a CPUID instruction which is to be executed with VM 530 on behalf of guest OS 540.

In an illustrative scenario according to one embodiment, evaluator 546 provides additional functionality to search shared memory table(s) 527 for hardware characteristic information that is the target of a CPUID instruction detected by detector 541. For example, shared memory table(s) 527 function as a type of cache for such hardware characteristic information.

Where the search of shared memory table(s) 527 is successful, evaluator 546 (or another suitable resource of VM 530) communicates the hardware characteristic information - e.g., with signal 547 - to consumer 545. Otherwise, evaluator 546 signals selector 542 to perform operations - such as those of selector 442 - which determine (based on configuration bit 543) whether execution of the CPUID instruction is to result in host passthrough 522 or (alternatively) a VM exit. In a case where the hardware characteristic information is retrieved by VM 530 using host passthrough 522 (or, for example, using a VM exit), selector 542 - or another suitable resource of VM 530 or VMM 520 - further writes the hardware characteristic information to shared memory table(s) 527 using, for example, signal 548.

Some embodiments facilitate a host passthrough based on a hardware identification instruction which is to be executed with a nested VM - i.e., a VM which is managed by or otherwise provided with a guest hypervisor process which, in turn, is provided with a host hypervisor process. For example, referring again to FIG. 1, in one illustrative embodiment, a control parameter corresponding to a resource of VM 180 is used to determine whether execution of a CPUID instruction on behalf of guest OS 182 is to include or otherwise result in a host passthrough or - alternatively - a switch by processor 120 from running VM 180 to running guest VMM 172. In one such embodiment, VM 180 and guest VMM 172 correspond functionally to VM 530 and VMM 520 (respectively) - e.g., wherein a shared memory, accessible to both VM 180 and guest VMM 172, is searched by VM 180 to determine whether hardware characteristic information, targeted by a CPUID instruction, is available to be retrieved without either a host passthrough or a VM exit. In some embodiments, such as shared memory additionally or alternatively stores information with which VM 180 is to identify a current value of the corresponding control parameter.

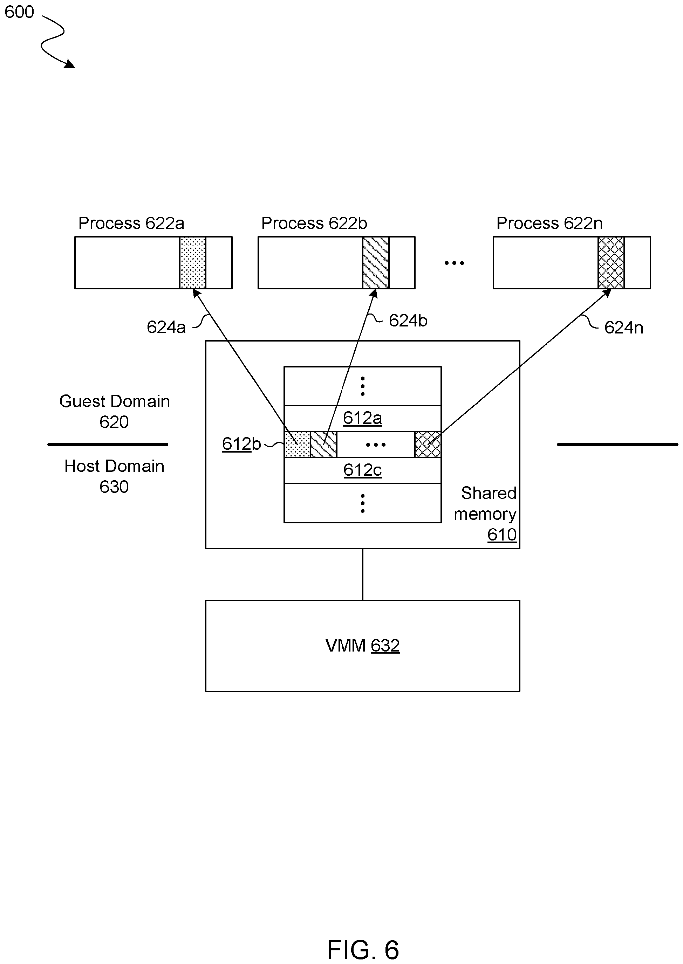

FIG. 6 illustrates features of a virtualization architecture 600 to conditionally enable various host passthroughs according to an embodiment. Virtualization architecture 600 illustrates one example of an embodiment wherein multiple VM resources - e.g., resources of different respective VMs - each correspond to a respective authorization state indicating whether a host passthrough functionality is to be made available for the execution of a hardware identification instruction. In various embodiments, virtualization architecture 600 provides functionality such as that of one of virtualization architectures 100, 400, 500 - e.g., wherein some or all of methods 200, 250, 300 are performed with virtualization architecture 600.

As shown in FIG. 6, virtualization architecture 600 comprises a software environment which is provided with circuitry (not shown) such as those of hardware 110, hardware 410, or hardware 510. In the example embodiment shown, the software environment includes a host domain 630 - comprising the illustrative VMM 632 shown - and a guest domain 620 which is managed by and/or otherwise provided with host domain 630. VMM 632 is a hypervisor process to host one or more virtual machine processes (e.g., including the illustrative processes 622a, 622b,..., 622n shown).

A hardware processor (not shown) of virtualization architecture 600 variously executes instructions on behalf of host domain 630 and/or guest domain 620. In one such embodiment, the processor supports a host passthrough functionality which is to be selectively made available to variously facilitate one or more VMs each executing a respective hardware identification instruction.

For example, control parameters are variously used to specify or otherwise indicate which of VM processes 622a, 622b,..., 622n are to have access to the host passthrough functionality. In the example embodiment shown, virtualization architecture 600 comprises one or more registers, tables, and/or other suitable storage resources (represented by the illustrative shared memory 610 shown) to function as a repository of said control parameters.

By way of illustration and not limitation, entries 612a, 612b,..., 612n in shared memory 610 variously identify configuration state of guest domain 620 - e.g., wherein entry 612b comprises configuration bits 624a, 624b,..., 624n which correspond to VM processes 622a, 622b,..., 622n (respectively). In the example embodiment shown, a value of configuration bit 624a indicates whether execution of a CPUID instruction (or other such hardware identification instruction) with process 622a is to comprise or otherwise result in the use of a host passthrough. Furthermore, a value of configuration bit 624b indicates whether execution of a CPUID instruction with process 622b is to result in use of such a host passthrough. Further still, a value of configuration bit 624n indicates whether execution of a CPUID instruction with process 622n is to result in use of such a host passthrough. In various embodiments, virtualization architecture 600 provides more, fewer and/or different control parameters to configure the availability of a host passthrough functionality.

Accordingly, in one such embodiment, some or all of control bits 624a, 624b,..., 624n (or other such control parameters) selectively enables access to a host passthrough functionality, for hardware identification instructions, at a VM-specific granularity level. Additionally or alternatively, a given control parameter selectively enables such access at higher granularity level - e.g., wherein a given one of control bits 624a, 624b,..., 624n corresponds to multiple VM processes (such as VM processes which share a common host VMM), and identifies a single common authorization state for each of the multiple VM processes.

The figures described herein detail exemplary architectures and systems to implement embodiments of the above. In some embodiments, one or more hardware components and/or instructions described herein are emulated as detailed below, or implemented as software modules.

Embodiments of the instruction(s) detailed above are embodied may be embodied in a "generic vector friendly instruction format" which is detailed herein. In other embodiments, such a format is not utilized and another instruction format is used, however, the description herein of the writemask registers, various data transformations (swizzle, broadcast, etc.), addressing, etc. is generally applicable to the description of the embodiments of the instruction(s) above. Additionally, exemplary systems, architectures, and pipelines are detailed herein. Embodiments of the instruction(s) above may be executed on such systems, architectures, and pipelines, but are not limited to those detailed.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, September 2014; and see Intel^{®} Advanced Vector Extensions Programming Reference, October 2014).

### Exemplary Instruction Formats

Embodiments of the instruction(s) described herein may be embodied in different formats. Additionally, exemplary systems, architectures, and pipelines are detailed herein. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

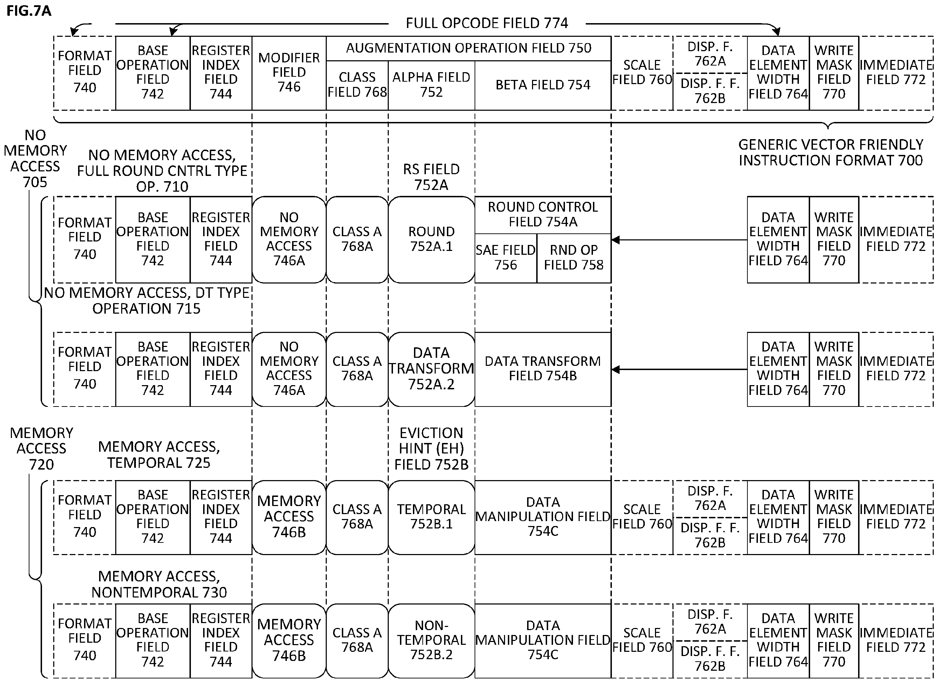

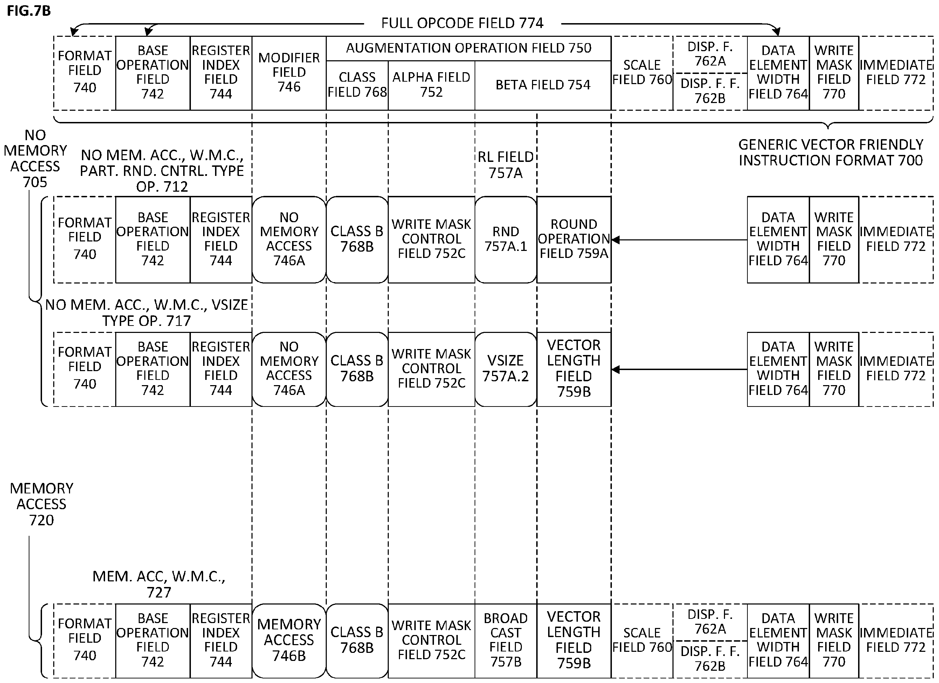

FIGs. 7A through 7B are block diagrams illustrating a generic vector friendly instruction format and instruction templates thereof according to embodiments of the invention. FIG. 7A is a block diagram illustrating a generic vector friendly instruction format and class A instruction templates thereof according to embodiments of the invention; while FIG. 7B is a block diagram illustrating the generic vector friendly instruction format and class B instruction templates thereof according to embodiments of the invention. Specifically, a generic vector friendly instruction format 700 for which are defined class A and class B instruction templates, both of which include no memory access 705 instruction templates and memory access 720 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in FIG. 7A include: 1) within the no memory access 705 instruction templates there is shown a no memory access, full round control type operation 710 instruction template and a no memory access, data transform type operation 715 instruction template; and 2) within the memory access 720 instruction templates there is shown a memory access, temporal 725 instruction template and a memory access, non-temporal 730 instruction template. The class B instruction templates in FIG. 7B include: 1) within the no memory access 705 instruction templates there is shown a no memory access, write mask control, partial round control type operation 712 instruction template and a no memory access, write mask control, vsize type operation 717 instruction template; and 2) within the memory access 720 instruction templates there is shown a memory access, write mask control 727 instruction template.

The generic vector friendly instruction format 700 includes the following fields listed herein in the order illustrated in FIGs. 7A through 7B.

Format field 740 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 742 - its content distinguishes different base operations.

Register index field 744 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 746 - its content distinguishes occurrences of instructions in the generic vector instruction format that specify memory access from those that do not; that is, between no memory access 705 instruction templates and memory access 720 instruction templates (e.g., no memory access 746A and memory access 746B for the class field 768 respectively in FIGs. 7A-B). Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 750 - its content distinguishes which one of a variety of different operations to be performed in addition to the base operation. This field is context specific. In one embodiment of the invention, this field is divided into a class field 768, an alpha field 752, and a beta field 754. The augmentation operation field 750 allows common groups of operations to be performed in a single instruction rather than 2, 3, or 4 instructions.

Scale field 760 - its content allows for the scaling of the index field's content for memory address generation (e.g., for address generation that uses 2scale ^{∗} index + base).

Displacement Field 762A- its content is used as part of memory address generation (e.g., for address generation that uses 2scale ^{∗} index + base + displacement).

Displacement Factor Field 762B (note that the juxtaposition of displacement field 762A directly over displacement factor field 762B indicates one or the other is used) - its content is used as part of address generation; it specifies a displacement factor that is to be scaled by the size of a memory access (N) - where N is the number of bytes in the memory access (e.g., for address generation that uses 2scale ^{∗} index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 774 (described later herein) and the data manipulation field 754C. The displacement field 762A and the displacement factor field 762B are optional in the sense that they are not used for the no memory access 705 instruction templates and/or different embodiments may implement only one or none of the two.

Data element width field 764 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 770 - its content controls, on a per data element position basis, whether that data element position in the destination vector operand reflects the result of the base operation and augmentation operation. Class A instruction templates support mergingwritemasking, while class B instruction templates support both merging- and zeroingwritemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 770 allows for partial vector operations, including loads, stores, arithmetic, logical, etc. While embodiments of the invention are described in which the write mask field's 770 content selects one of a number of write mask registers that contains the write mask to be used (and thus the write mask field's 770 content indirectly identifies that masking to be performed), alternative embodiments instead or additional allow the write mask field's 770 content to directly specify the masking to be performed.

Immediate field 772 - its content allows for the specification of an immediate. This field is optional in the sense that is it not present in an implementation of the generic vector friendly format that does not support immediate and it is not present in instructions that do not use an immediate.

Class field 768 - its content distinguishes between different classes of instructions. With reference to FIGs. 7A-B, the contents of this field select between class A and class B instructions. In FIGs. 7A-B, rounded corner squares are used to indicate a specific value is present in a field (e.g., class A 768A and class B 768B for the class field 768 respectively in FIGs. 7A-B).

### Instruction Templates of Class A

In the case of the non-memory access 705 instruction templates of class A, the alpha field 752 is interpreted as an RS field 752A, whose content distinguishes which one of the different augmentation operation types are to be performed (e.g., round 752A.1 and data transform 752A.2 are respectively specified for the no memory access, round type operation 710 and the no memory access, data transform type operation 715 instruction templates), while the beta field 754 distinguishes which of the operations of the specified type is to be performed. In the no memory access 705 instruction templates, the scale field 760, the displacement field 762A, and the displacement scale field 762B are not present.

### No-Memory Access Instruction Templates - Full Round Control Type Operation

In the no memory access full round control type operation 710 instruction template, the beta field 754 is interpreted as a round control field 754A, whose content(s) provide static rounding. While in the described embodiments of the invention the round control field 754A includes a suppress all floating point exceptions (SAE) field 756 and a round operation control field 758, alternative embodiments may support may encode both these concepts into the same field or only have one or the other of these concepts/fields (e.g., may have only the round operation control field 758).

SAE field 756 - its content distinguishes whether or not to disable the exception event reporting; when the SAE field's 756 content indicates suppression is enabled, a given instruction does not report any kind of floating-point exception flag and does not raise any floating point exception handler.

Round operation control field 758 - its content distinguishes which one of a group of rounding operations to perform (e.g., Round-up, Round-down, Round-towards-zero and Round-to-nearest). Thus, the round operation control field 758 allows for the changing of the rounding mode on a per instruction basis. In one embodiment of the invention where a processor includes a control register for specifying rounding modes, the round operation control field's 758 content overrides that register value.

### No Memory Access Instruction Templates - Data Transform Type Operation

In the no memory access data transform type operation 715 instruction template, the beta field 754 is interpreted as a data transform field 754B, whose content distinguishes which one of a number of data transforms is to be performed (e.g., no data transform, swizzle, broadcast).

In the case of a memory access 720 instruction template of class A, the alpha field 752 is interpreted as an eviction hint field 752B, whose content distinguishes which one of the eviction hints is to be used (in FIG. 7A, temporal 752B.1 and non-temporal 752B.2 are respectively specified for the memory access, temporal 725 instruction template and the memory access, non-temporal 730 instruction template), while the beta field 754 is interpreted as a data manipulation field 754C, whose content distinguishes which one of a number of data manipulation operations (also known as primitives) is to be performed (e.g., no manipulation; broadcast; up conversion of a source; and down conversion of a destination). The memory access 720 instruction templates include the scale field 760, and optionally the displacement field 762A or the displacement scale field 762B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 752 is interpreted as a write mask control (Z) field 752C, whose content distinguishes whether the write masking controlled by the write mask field 770 should be a merging or a zeroing.

In the case of the non-memory access 705 instruction templates of class B, part of the beta field 754 is interpreted as an RL field 757A, whose content distinguishes which one of the different augmentation operation types are to be performed (e.g., round 757A. 1 and vector length (VSIZE) 757A.2 are respectively specified for the no memory access, write mask control, partial round control type operation 712 instruction template and the no memory access, write mask control, VSIZE type operation 717 instruction template), while the rest of the beta field 754 distinguishes which of the operations of the specified type is to be performed. In the no memory access 705 instruction templates, the scale field 760, the displacement field 762A, and the displacement scale field 762B are not present.

In the no memory access, write mask control, partial round control type operation 712 instruction template, the rest of the beta field 754 is interpreted as a round operation field 759A and exception event reporting is disabled (a given instruction does not report any kind of floating-point exception flag and does not raise any floating point exception handler).

Round operation control field 759A - just as round operation control field 758, its content distinguishes which one of a group of rounding operations to perform (e.g., Round-up, Round-down, Round-towards-zero and Round-to-nearest). Thus, the round operation control field 759A allows for the changing of the rounding mode on a per instruction basis. In one embodiment of the invention where a processor includes a control register for specifying rounding modes, the round operation control field's 758 content overrides that register value.

In the no memory access, write mask control, VSIZE type operation 717 instruction template, the rest of the beta field 754 is interpreted as a vector length field 759B, whose content distinguishes which one of a number of data vector lengths is to be performed on (e.g., 128, 256, or 512 byte).

In the case of a memory access 720 instruction template of class B, part of the beta field 754 is interpreted as a broadcast field 757B, whose content distinguishes whether or not the broadcast type data manipulation operation is to be performed, while the rest of the beta field 754 is interpreted the vector length field 759B. The memory access 720 instruction templates include the scale field 760, and optionally the displacement field 762A or the displacement scale field 762B.

With regard to the generic vector friendly instruction format 700, a full opcode field 774 is shown including the format field 740, the base operation field 742, and the data element width field 764. While one embodiment is shown where the full opcode field 774 includes all of these fields, the full opcode field 774 includes less than all of these fields in embodiments that do not support all of them. The full opcode field 774 provides the operation code (opcode).

The augmentation operation field 750, the data element width field 764, and the write mask field 770 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

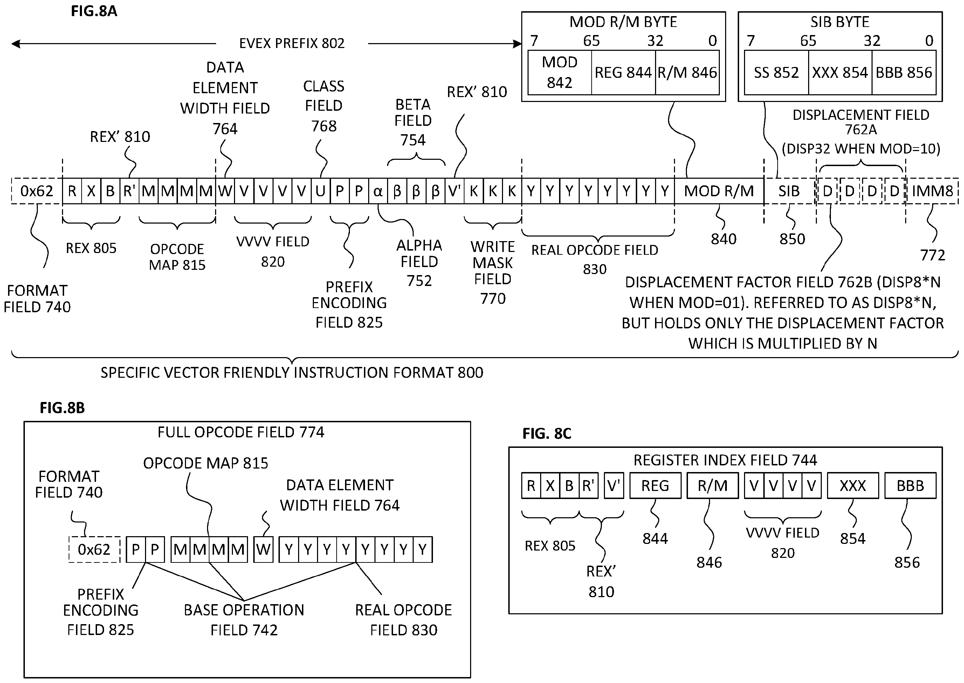

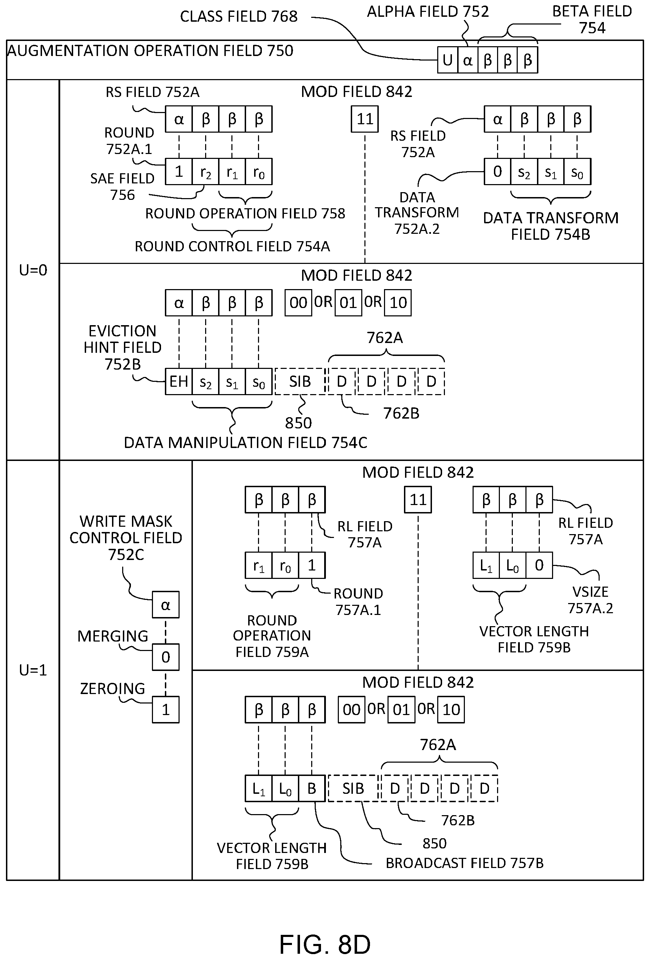

FIG. 8 is a block diagram illustrating an exemplary specific vector friendly instruction format according to embodiments of the invention. FIG. 8 shows a specific vector friendly instruction format 800 that is specific in the sense that it specifies the location, size, interpretation, and order of the fields, as well as values for some of those fields. The specific vector friendly instruction format 800 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from FIG. 7 into which the fields from FIG. 8 map are illustrated.

It should be understood that, although embodiments of the invention are described with reference to the specific vector friendly instruction format 800 in the context of the generic vector friendly instruction format 700 for illustrative purposes, the invention is not limited to the specific vector friendly instruction format 800 except where claimed. For example, the generic vector friendly instruction format 700 contemplates a variety of possible sizes for the various fields, while the specific vector friendly instruction format 800 is shown as having fields of specific sizes. By way of specific example, while the data element width field 764 is illustrated as a one bit field in the specific vector friendly instruction format 800, the invention is not so limited (that is, the generic vector friendly instruction format 700 contemplates other sizes of the data element width field 764).

The specific vector friendly instruction format 800 includes the following fields listed herein in the order illustrated in FIG. 8A.

EVEX Prefix (Bytes 0-3) 802 - is encoded in a four-byte form.

Format Field 740 (EVEX Byte 0, bits [7:0]) - the first byte (EVEX Byte 0) is the format field 740 and it contains 0x62 (the unique value used for distinguishing the vector friendly instruction format in one embodiment of the invention).

The second-fourth bytes (EVEX Bytes 1-3) include a number of bit fields providing specific capability.

REX field 805 (EVEX Byte 1, bits [7-5]) - consists of a EVEX.R bit field (EVEX Byte 1, bit [7] - R), EVEX.X bit field (EVEX byte 1, bit [6] - X), and 757BEX byte 1, bit[5] - B). The EVEX.R, EVEX.X, and EVEX.B bit fields provide the same functionality as the corresponding VEX bit fields, and are encoded using Is complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 810 - this is the first part of the REX' field 810 and is the EVEX.R' bit field (EVEX Byte 1, bit [4] - R') that is used to encode either the upper 16 or lower 16 of the extended 32 register set. In one embodiment of the invention, this bit, along with others as indicated herein, is stored in bit inverted format to distinguish (in the well-known x86 32-bit mode) from the BOUND instruction, whose real opcode byte is 62, but does not accept in the MOD R/M field (described herein) the value of 11 in the MOD field; alternative embodiments of the invention do not store this and the other indicated bits herein in the inverted format. A value of 1 is used to encode the lower 16 registers. In other words, R'Rrrr is formed by combining EVEX.R', EVEX.R, and the other RRR from other fields.

Opcode map field 815 (EVEX byte 1, bits [3:0] - mmmm) - its content encodes an implied leading opcode byte (0F, 0F 38, or 0F 3).

Data element width field 764 (EVEX byte 2, bit [7] - W) - is represented by the notation EVEX.W. EVEX.W is used to define the granularity (size) of the datatype (either 32-bit data elements or 64-bit data elements).

EVEX.vvvv 820 (EVEX Byte 2, bits [6:3]-vvvv)- the role of EVEX.vvvv may include the following: 1) EVEX.vvvv encodes the first source register operand, specified in inverted (Is complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 820 encodes the 4 low-order bits of the first source register specifier stored in inverted (Is complement) form. Depending on the instruction, an extra different EVEX bit field is used to extend the specifier size to 32 registers.

EVEX.U 768 Class field (EVEX byte 2, bit [2]-U) - If EVEX.U = 0, it indicates class A or EVEX.U0; if EVEX.U = 1, it indicates class B or EVEX.U1.

Prefix encoding field 825 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 752 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 754 (EVEX byte 3, bits [6:4]-SSS, also known as EVEX.s2-0, EVEX.r2-0, EVEX.rr1, EVEX.LL0, EVEX.LLB; also illustrated with βββ) - as previously described, this field is context specific.

REX' field 810 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 770 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 830 (Byte 4) is also known as the opcode byte. Part of the opcode is specified in this field.

MOD R/M Field 840 (Byte 5) includes MOD field 842, Reg field 844, and R/M field 846. As previously described, the MOD field's 842 content distinguishes between memory access and non-memory access operations. The role of Reg field 844 can be summarized to two situations: encoding either the destination register operand or a source register operand, or be treated as an opcode extension and not used to encode any instruction operand. The role of R/M field 846 may include the following: encoding the instruction operand that references a memory address, or encoding either the destination register operand or a source register operand.

Scale, Index, Base (SIB) Byte 850 (Byte 6) - As previously described, the scale field's 760 content is used for memory address generation. SIB.SS 852, SIB.xxx 854 and SIB.bbb 856 - the contents of these fields have been previously referred to with regard to the register indexes Xxxx and Bbbb.

Displacement field 762A (Bytes 7-10) - when MOD field 842 contains 10, bytes 7-10 are the displacement field 762A, and it works the same as the legacy 32-bit displacement (disp32) and works at byte granularity.

Displacement factor field 762B (Byte 7) - when MOD field 842 contains 01, byte 7 is the displacement factor field 762B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 762B is a reinterpretation of disp8; when using displacement factor field 762B, the actual displacement is determined by the content of the displacement factor field multiplied by the size of the memory operand access (N). This type of displacement is referred to as disp8^{∗}N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 762B substitutes the legacy x86 instruction set 8-bit displacement. Thus, the displacement factor field 762B is encoded the same way as an x86 instruction set 8-bit displacement (so no changes in the ModRM/SIB encoding rules) with the only exception that disp8 is overloaded to disp8^{∗}N. In other words, there are no changes in the encoding rules or encoding lengths but only in the interpretation of the displacement value by hardware (which needs to scale the displacement by the size of the memory operand to obtain a byte-wise address offset). Immediate field 772 operates as previously described.

### Full Opcode Field

FIG. 8B is a block diagram illustrating the fields of the specific vector friendly instruction format 800 that make up the full opcode field 774 according to one embodiment of the invention. Specifically, the full opcode field 774 includes the format field 740, the base operation field 742, and the data element width (W) field 764. The base operation field 742 includes the prefix encoding field 825, the opcode map field 815, and the real opcode field 830.

### Register Index Field

FIG. 8C is a block diagram illustrating the fields of the specific vector friendly instruction format 800 that make up the register index field 744 according to one embodiment of the invention. Specifically, the register index field 744 includes the REX field 805, the REX' field 810, the MODR/M.reg field 844, the MODR/M.r/m field 846, the VVVV field 820, xxx field 854, and the bbb field 856.

### Augmentation Operation Field

FIG. 8D is a block diagram illustrating the fields of the specific vector friendly instruction format 800 that make up the augmentation operation field 750 according to one embodiment of the invention. When the class (U) field 768 contains 0, it signifies EVEX.U0 (class A 768A); when it contains 1, it signifies EVEX.U1 (class B 768B). When U=0 and the MOD field 842 contains 11 (signifying a no memory access operation), the alpha field 752 (EVEX byte 3, bit [7] - EH) is interpreted as the rs field 752A. When the rs field 752A contains a 1 (round 752A.1), the beta field 754 (EVEX byte 3, bits [6:4]- SSS) is interpreted as the round control field 754A. The round control field 754A includes a one bit SAE field 756 and a two bit round operation field 758. When the rs field 752A contains a 0 (data transform 752A.2), the beta field 754 (EVEX byte 3, bits [6:4]- SSS) is interpreted as a three bit data transform field 754B. When U=0 and the MOD field 842 contains 00, 01, or 10 (signifying a memory access operation), the alpha field 752 (EVEX byte 3, bit [7] - EH) is interpreted as the eviction hint (EH) field 752B and the beta field 754 (EVEX byte 3, bits [6:4]- SSS) is interpreted as a three bit data manipulation field 754C.

When U=1, the alpha field 752 (EVEX byte 3, bit [7] - EH) is interpreted as the write mask control (Z) field 752C. When U=1 and the MOD field 842 contains 11 (signifying a no memory access operation), part of the beta field 754 (EVEX byte 3, bit [4]- S0) is interpreted as the RL field 757A; when it contains a 1 (round 757A.1) the rest of the beta field 754 (EVEX byte 3, bit [6-5]- S2-1) is interpreted as the round operation field 759A, while when the RL field 757A contains a 0 (VSIZE 757.A2) the rest of the beta field 754 (EVEX byte 3, bit [6-5]- S2-1) is interpreted as the vector length field 759B (EVEX byte 3, bit [6-5]- L1-0). When U=1 and the MOD field 842 contains 00, 01, or 10 (signifying a memory access operation), the beta field 754 (EVEX byte 3, bits [6:4]- SSS) is interpreted as the vector length field 759B (EVEX byte 3, bit [6-5]- L1-0) and the broadcast field 757B (EVEX byte 3, bit [4]- B).

### Exemplary Register Architecture

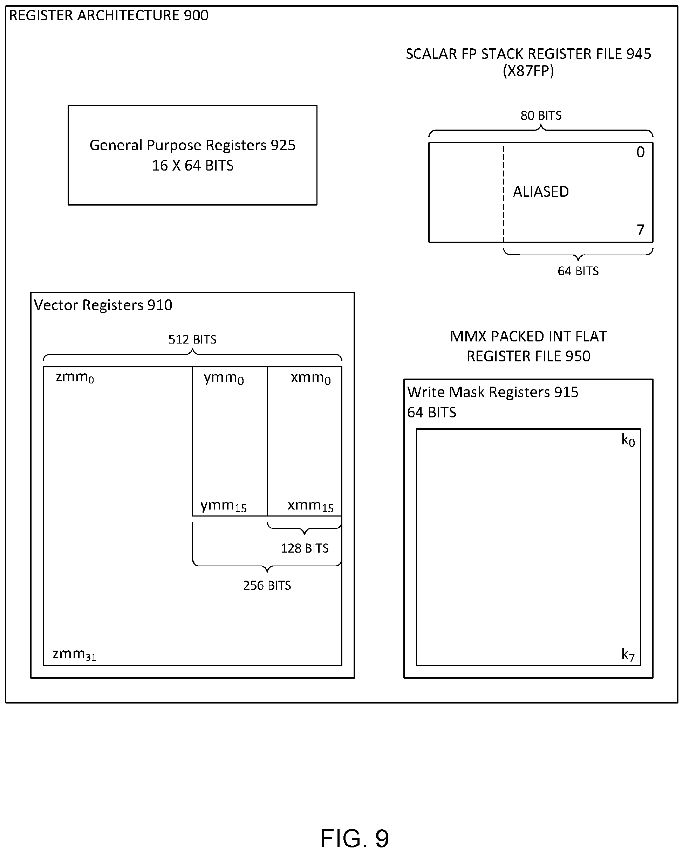

FIG. 9 is a block diagram of a register architecture 900 according to one embodiment of the invention. In the embodiment illustrated, there are 32 vector registers 910 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 800 operates on these overlaid register file as illustrated in the below tables.

| Adjustable Vector Length | Class | Operations | Registers |
|---|---|---|---|
| Instruction Templates that do not include the vector length field 759B | A (FIG. 7A; U=0) | 710, 715, 725, 730 | zmm registers (the vector length is 64 byte) |
| | B (FIG. 7B; U=1) | 712 | zmm registers (the vector length is 64 byte) |
| Instruction templates that do include the vector length field 759B | B (FIG. 7B; U=1) | 717,727 | zmm, ymm, or xmm registers (the vector length is 64 byte, 32 byte, or 16 byte) depending on the vector length field 759B |

In other words, the vector length field 759B selects between a maximum length and one or more other shorter lengths, where each such shorter length is half the length of the preceding length; and instructions templates without the vector length field 759B operate on the maximum vector length. Further, in one embodiment, the class B instruction templates of the specific vector friendly instruction format 800 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 915 - in the embodiment illustrated, there are 8 write mask registers (k0 through k7), each 64 bits in size. In an alternate embodiment, the write mask registers 915 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 925 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 945, on which is aliased the MMX packed integer flat register file 950 - in the embodiment illustrated, the x87 stack is an eightelement stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

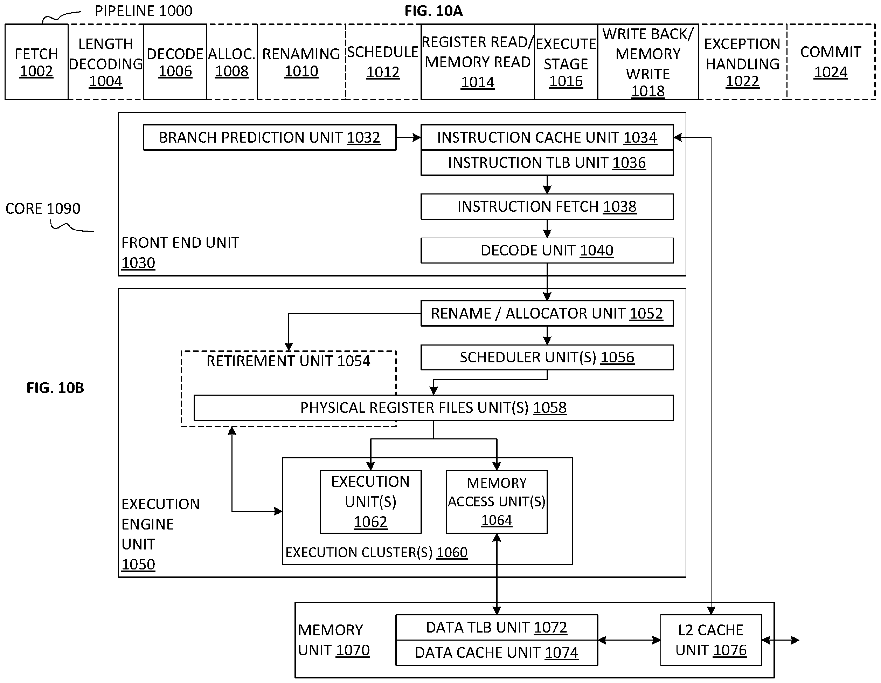

FIG. 10A is a block diagram illustrating both an exemplary in-order pipeline and an exemplary register renaming, out-of-order issue/execution pipeline according to embodiments of the invention. FIG. 10B is a block diagram illustrating both an exemplary embodiment of an in-order architecture core and an exemplary register renaming, out-of-order issue/execution architecture core to be included in a processor according to embodiments of the invention. The solid lined boxes in FIGs. 10A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 10A, a processor pipeline 1000 includes a fetch stage 1002, a length decode stage 1004, a decode stage 1006, an allocation stage 1008, a renaming stage 1010, a scheduling (also known as a dispatch or issue) stage 1012, a register read/memory read stage 1014, an execute stage 1016, a write back/memory write stage 1018, an exception handling stage 1022, and a commit stage 1024.

FIG. 10B shows processor core 1090 including a front end unit 1030 coupled to an execution engine unit 1050, and both are coupled to a memory unit 1070. The core 1090 may be a reduced instruction set computing (RISC) core, a complex instruction set computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front end unit 1030 includes a branch prediction unit 1032 coupled to an instruction cache unit 1034, which is coupled to an instruction translation lookaside buffer (TLB) 1036, which is coupled to an instruction fetch unit 1038, which is coupled to a decode unit 1040. The decode unit 1040 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1040 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1090 includes a microcode ROM or other medium that stores microcode for certain macroinstructions (e.g., in decode unit 1040 or otherwise within the front end unit 1030). The decode unit 1040 is coupled to a rename/allocator unit 1052 in the execution engine unit 1050.

The execution engine unit 1050 includes the rename/allocator unit 1052 coupled to a retirement unit 1054 and a set of one or more scheduler unit(s) 1056. The scheduler unit(s) 1056 represents any number of different schedulers, including reservations stations, central instruction window, etc. The scheduler unit(s) 1056 is coupled to the physical register file(s) unit(s) 1058. Each of the physical register file(s) units 1058 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 1058 comprises a vector registers unit, a write mask registers unit, and a scalar registers unit. These register units may provide architectural vector registers, vector mask registers, and general purpose registers. The physical register file(s) unit(s) 1058 is overlapped by the retirement unit 1054 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1054 and the physical register file(s) unit(s) 1058 are coupled to the execution cluster(s) 1060. The execution cluster(s) 1060 includes a set of one or more execution units 1062 and a set of one or more memory access units 1064. The execution units 1062 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1056, physical register file(s) unit(s) 1058, and execution cluster(s) 1060 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1064). It should also be understood that where separate pipelines are used, one or more of these pipelines may be out-of-order issue/execution and the rest in-order.

The set of memory access units 1064 is coupled to the memory unit 1070, which includes a data TLB unit 1072 coupled to a data cache unit 1074 coupled to a level 2 (L2) cache unit 1076. In one exemplary embodiment, the memory access units 1064 may include a load unit, a store address unit, and a store data unit, each of which is coupled to the data TLB unit 1072 in the memory unit 1070. The instruction cache unit 1034 is further coupled to a level 2 (L2) cache unit 1076 in the memory unit 1070. The L2 cache unit 1076 is coupled to one or more other levels of cache and eventually to a main memory.

By way of example, the exemplary register renaming, out-of-order issue/execution core architecture may implement the pipeline 1000 as follows: 1) the instruction fetch 1038 performs the fetch and length decoding stages 1002 and 1004; 2) the decode unit 1040 performs the decode stage 1006; 3) the rename/allocator unit 1052 performs the allocation stage 1008 and renaming stage 1010; 4) the scheduler unit(s) 1056 performs the schedule stage 1012; 5) the physical register file(s) unit(s) 1058 and the memory unit 1070 perform the register read/memory read stage 1014; the execution cluster 1060 perform the execute stage 1016; 6) the memory unit 1070 and the physical register file(s) unit(s) 1058 perform the write back/memory write stage 1018; 7) various units may be involved in the exception handling stage 1022; and 8) the retirement unit 1054 and the physical register file(s) unit(s) 1058 perform the commit stage 1024.

The core 1090 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1090 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 1034/1074 and a shared L2 cache unit 1076, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

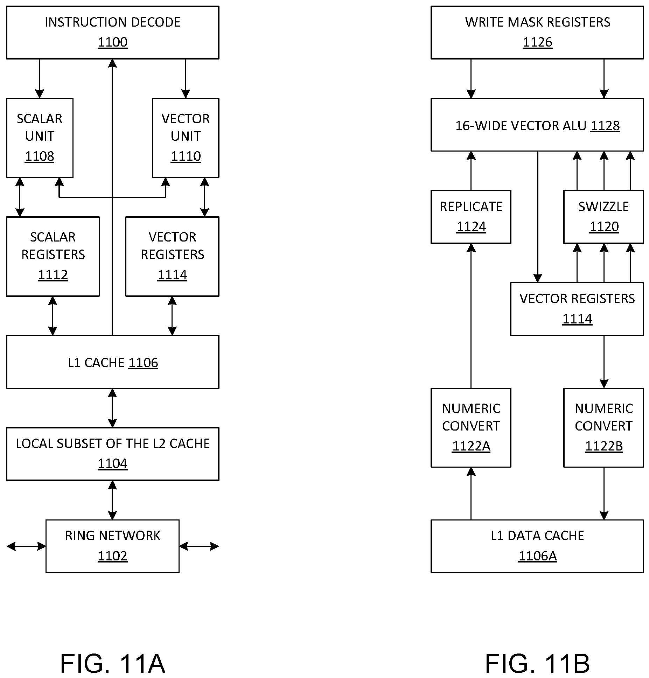

FIGs. 11A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 11A is a block diagram of a single processor core, along with its connection to the on-die interconnect network 1102 and with its local subset of the Level 2 (L2) cache 1104, according to embodiments of the invention. In one embodiment, an instruction decoder 1100 supports the x86 instruction set with a packed data instruction set extension. An L1 cache 1106 allows low-latency accesses to cache memory into the scalar and vector units. While in one embodiment (to simplify the design), a scalar unit 1108 and a vector unit 1110 use separate register sets (respectively, scalar registers 1112 and vector registers 1114) and data transferred between them is written to memory and then read back in from a level 1 (L1) cache 1106, alternative embodiments of the invention may use a different approach (e.g., use a single register set or include a communication path that allow data to be transferred between the two register files without being written and read back).

The local subset of the L2 cache 1104 is part of a global L2 cache that is divided into separate local subsets, one per processor core. Each processor core has a direct access path to its own local subset of the L2 cache 1104. Data read by a processor core is stored in its L2 cache subset 1104 and can be accessed quickly, in parallel with other processor cores accessing their own local L2 cache subsets. Data written by a processor core is stored in its own L2 cache subset 1104 and is flushed from other subsets, if necessary. The ring network ensures coherency for shared data. The ring network is bi-directional to allow agents such as processor cores, L2 caches and other logic blocks to communicate with each other within the chip. Each ring datapath is 1012-bits wide per direction.

FIG. 11B is an expanded view of part of the processor core in FIG. 11A according to embodiments of the invention. FIG. 11B includes an L1 data cache 1106A part of the L1 cache 1106, as well as more detail regarding the vector unit 1110 and the vector registers 1114. Specifically, the vector unit 1110 is a 16-wide vector processing unit (VPU) (see the 16-wide ALU 1128), which executes one or more of integer, single-precision float, and double-precision float instructions. The VPU supports swizzling the register inputs with swizzle unit 1120, numeric conversion with numeric convert units 1122A-B, and replication with replication unit 1124 on the memory input. Write mask registers 1126 allow predicating resulting vector writes.

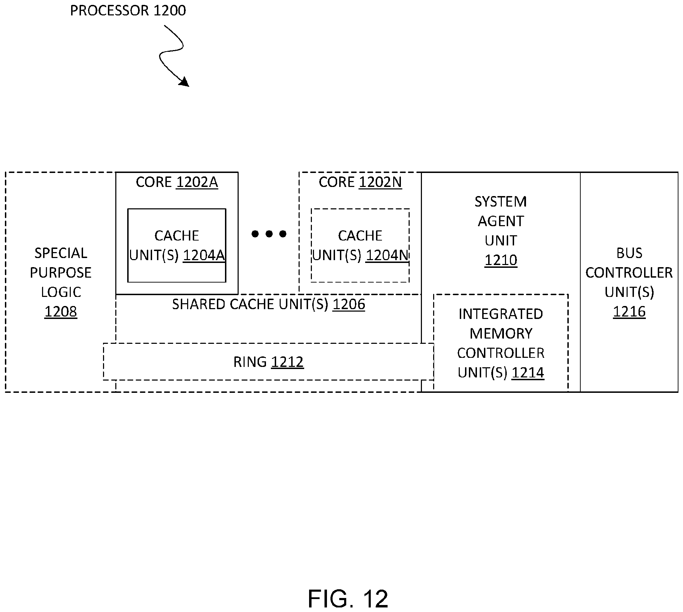

FIG. 12 is a block diagram of a processor 1200 that may have more than one core, may have an integrated memory controller, and may have integrated graphics according to embodiments of the invention. The solid lined boxes in FIG. 12 illustrate a processor 1200 with a single core 1202A, a system agent 1210, a set of one or more bus controller units 1216, while the optional addition of the dashed lined boxes illustrates an alternative processor 1200 with multiple cores 1202A-N, a set of one or more integrated memory controller unit(s) 1214 in the system agent unit 1210, and special purpose logic 1208.

Thus, different implementations of the processor 1200 may include: 1) a CPU with the special purpose logic 1208 being integrated graphics and/or scientific (throughput) logic (which may include one or more cores), and the cores 1202A-N being one or more general purpose cores (e.g., general purpose in-order cores, general purpose out-of-order cores, a combination of the two); 2) a coprocessor with the cores 1202A-N being a large number of special purpose cores intended primarily for graphics and/or scientific (throughput); and 3) a coprocessor with the cores 1202A-N being a large number of general purpose in-order cores. Thus, the processor 1200 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1200 may be a part of and/or may be implemented on one or more substrates using any of a number of process technologies, such as, for example, BiCMOS, CMOS, or NMOS.

The memory hierarchy includes respective one or more levels of caches 1204A-N within cores 1202A-N, a set or one or more shared cache units 1206, and external memory (not shown) coupled to the set of integrated memory controller units 1214. The set of shared cache units 1206 may include one or more mid-level caches, such as level 2 (L2), level 3 (L3), level 4 (L4), or other levels of cache, a last level cache (LLC), and/or combinations thereof. While in one embodiment a ring based interconnect unit 1212 interconnects the special purpose logic 1208, the set of shared cache units 1206, and the system agent unit 1210/integrated memory controller unit(s) 1214, alternative embodiments may use any number of well-known techniques for interconnecting such units. In one embodiment, coherency is maintained between one or more cache units 1206 and cores 1202-A-N.

In some embodiments, one or more of the cores 1202A-N are capable of multithreading. The system agent 1210 includes those components coordinating and operating cores 1202A-N. The system agent unit 1210 may include for example a power control unit (PCU) and a display unit. The PCU may be or include logic and components needed for regulating the power state of the cores 1202A-N and the special purpose logic 1208. The display unit is for driving one or more externally connected displays.

The cores 1202A-N may be homogenous or heterogeneous in terms of architecture instruction set; that is, two or more of the cores 1202A-N may be capable of execution the same instruction set, while others may be capable of executing only a subset of that instruction set or a different instruction set.

### Exemplary Computer Architectures

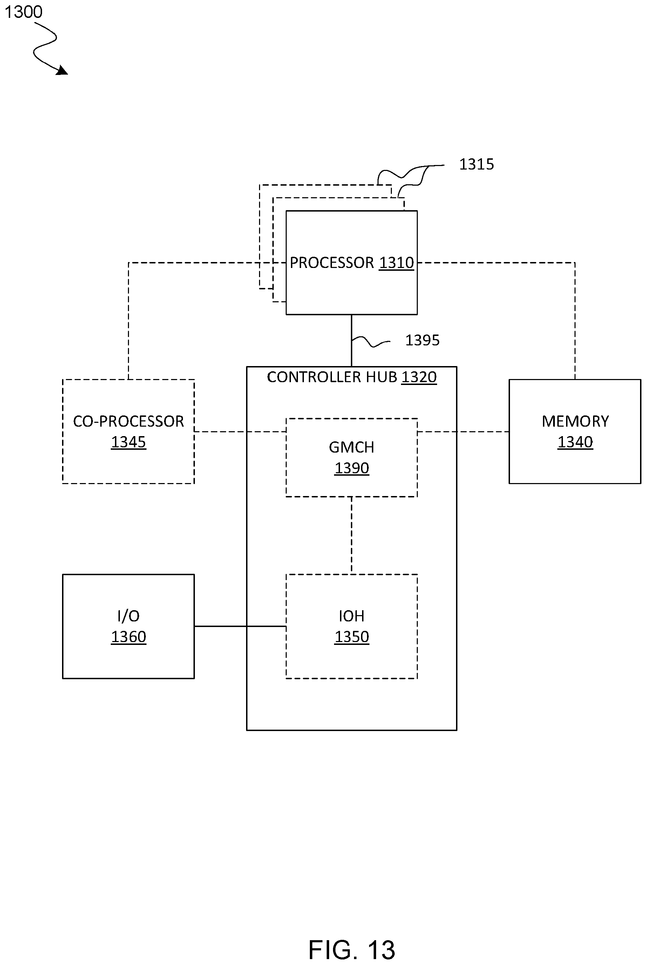

FIGs. 13 through 16 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 13, shown is a block diagram of a system 1300 in accordance with one embodiment of the present invention. The system 1300 may include one or more processors 1310, 1315, which are coupled to a controller hub 1320. In one embodiment the controller hub 1320 includes a graphics memory controller hub (GMCH) 1390 and an Input/Output Hub (IOH) 1350 (which may be on separate chips); the GMCH 1390 includes memory and graphics controllers to which are coupled memory 1340 and a coprocessor 1345; the IOH 1350 couples input/output (I/O) devices 1360 to the GMCH 1390. Alternatively, one or both of the memory and graphics controllers are integrated within the processor (as described herein), the memory 1340 and the coprocessor 1345 are coupled directly to the processor 1310, and the controller hub 1320 in a single chip with the IOH 1350.

The optional nature of additional processors 1315 is denoted in FIG. 13 with broken lines. Each processor 1310, 1315 may include one or more of the processing cores described herein and may be some version of the processor 1200.

The memory 1340 may be, for example, dynamic random access memory (DRAM), phase change memory (PCM), or a combination of the two. For at least one embodiment, the controller hub 1320 communicates with the processor(s) 1310, 1315 via a multi-drop bus, such as a frontside bus (FSB), point-to-point interface such as QuickPath Interconnect (QPI), or similar connection 1395.

In one embodiment, the coprocessor 1345 is a special-purpose processor, such as, for example, a high-throughput MIC processor, a network or communication processor, compression engine, graphics processor, GPGPU, embedded processor, or the like. In one embodiment, controller hub 1320 may include an integrated graphics accelerator.

There can be a variety of differences between the processors 1310, 1315 in terms of a spectrum of metrics of merit including architectural, microarchitectural, thermal, power consumption characteristics, and the like.

In one embodiment, the processor 1310 executes instructions that control data processing operations of a general type. Embedded within the instructions may be coprocessor instructions. The processor 1310 recognizes these coprocessor instructions as being of a type that should be executed by the attached coprocessor 1345. Accordingly, the processor 1310 issues these coprocessor instructions (or control signals representing coprocessor instructions) on a coprocessor bus or other interconnect, to coprocessor 1345. Coprocessor(s) 1345 accept and execute the received coprocessor instructions.

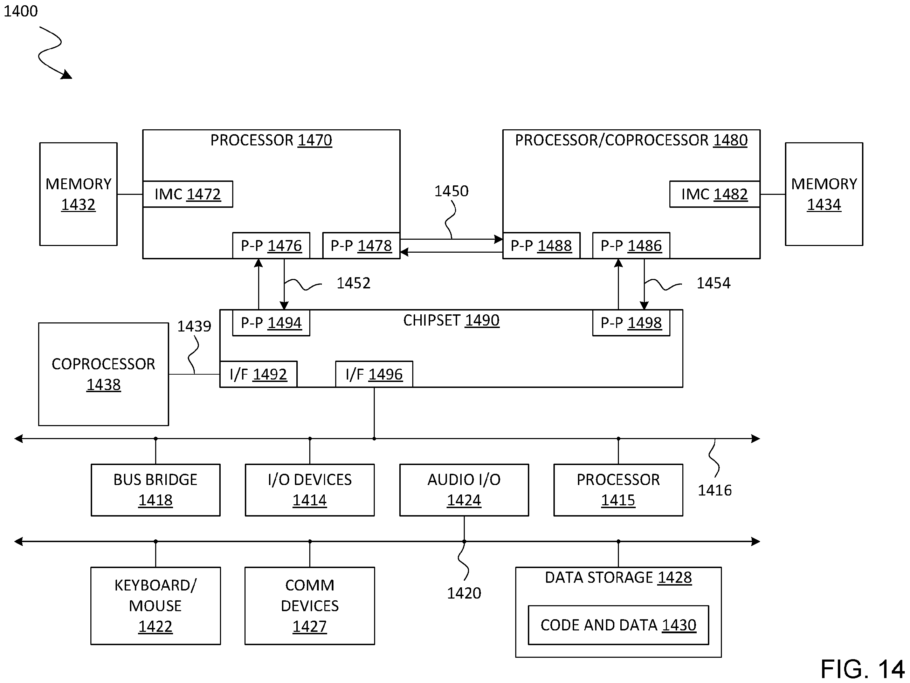

Referring now to FIG. 14, shown is a block diagram of a first more specific exemplary system 1400 in accordance with an embodiment of the present invention. As shown in FIG. 14, multiprocessor system 1400 is a point-to-point interconnect system, and includes a first processor 1470 and a second processor 1480 coupled via a point-to-point interconnect 1450. Each of processors 1470 and 1480 may be some version of the processor 1200. In one embodiment of the invention, processors 1470 and 1480 are respectively processors 1310 and 1315, while coprocessor 1438 is coprocessor 1345. In another embodiment, processors 1470 and 1480 are respectively processor 1310 coprocessor 1345.

Processors 1470 and 1480 are shown including integrated memory controller (IMC) units 1472 and 1482, respectively. Processor 1470 also includes as part of its bus controller unit's point-to-point (P-P) interfaces 1476 and 1478; similarly, second processor 1480 includes P-P interfaces 1486 and 1488. Processors 1470, 1480 may exchange information via a point-to-point (P-P) interconnect 1450 using P-P interface circuits 1478, 1488. As shown in FIG. 14, IMCs 1472 and 1482 couple the processors to respective memories, namely a memory 1432 and a memory 1434, which may be portions of main memory locally attached to the respective processors.

Processors 1470, 1480 may each exchange information with a chipset 1490 via individual P-P interfaces 1452, 1454 using point to point interface circuits 1476, 1494, 1486, 1498. Chipset 1490 may optionally exchange information with the coprocessor 1438 via a highperformance interface 1492 and an interconnect 1439. In one embodiment, the coprocessor 1438 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1490 may be coupled to a first bus 1416 via an interface 1496. In one embodiment, first bus 1416 may be a Peripheral Component Interconnect (PCI) bus, or a bus such as a PCI Express bus or another third generation I/O interconnect bus, although the scope of the present invention is not so limited.

As shown in FIG. 14, various I/O devices 1414 may be coupled to first bus 1416, along with a bus bridge 1418 which couples first bus 1416 to a second bus 1420. In one embodiment, one or more additional processor(s) 1415, such as coprocessors, high-throughput MIC processors, GPGPU's, accelerators (such as, e.g., graphics accelerators or digital signal processing (DSP) units), field programmable gate arrays, or any other processor, are coupled to first bus 1416. In one embodiment, second bus 1420 may be a low pin count (LPC) bus. Various devices may be coupled to a second bus 1420 including, for example, a keyboard and/or mouse 1422, communication devices 1427 and a storage unit 1428 such as a disk drive or other mass storage device which may include instructions/code and data 1430, in one embodiment. Further, an audio I/O 1424 may be coupled to the second bus 1420. Note that other architectures are possible. For example, instead of the point-to-point architecture of FIG. 14, a system may implement a multi-drop bus or other such architecture.

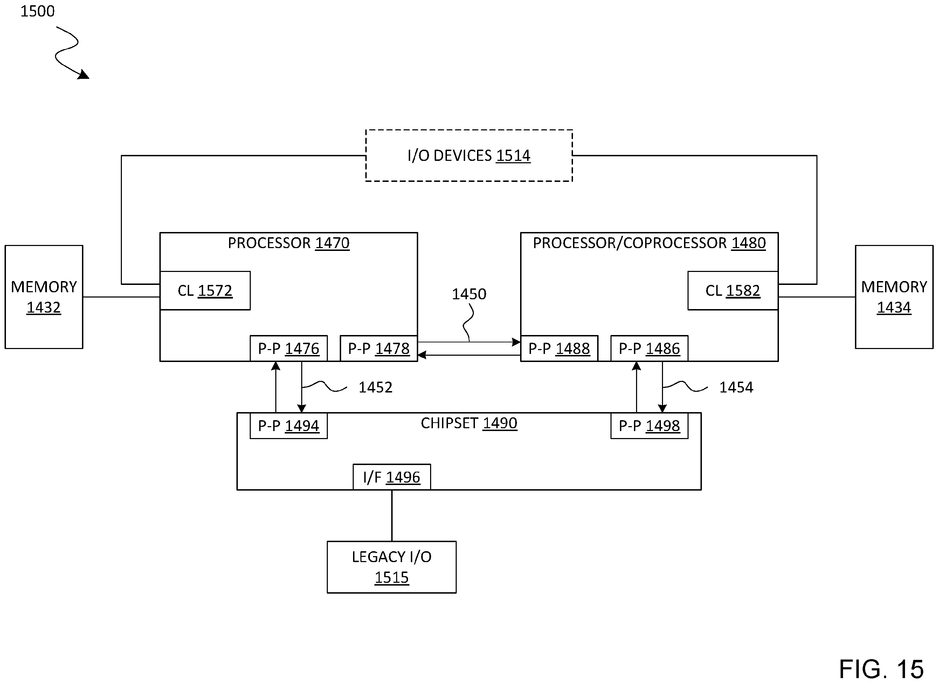

Referring now to FIG. 15, shown is a block diagram of a second more specific exemplary system 1500 in accordance with an embodiment of the present invention. Like elements in FIGs. 14 and 15 bear like reference numerals, and certain aspects of FIG. 14 have been omitted from FIG. 15 in order to avoid obscuring other aspects of FIG. 15.

FIG. 15 illustrates that the processors 1470, 1480 may include integrated memory and I/O control logic ("CL") 1572 and 1582, respectively. Thus, the CL 1572, 1582 include integrated memory controller units and include I/O control logic. FIG. 15 illustrates that not only are the memories 1432, 1434 coupled to the CL 1572, 1582, but also that I/O devices 1514 are also coupled to the control logic 1572, 1582. Legacy I/O devices 1515 are coupled to the chipset 1490.

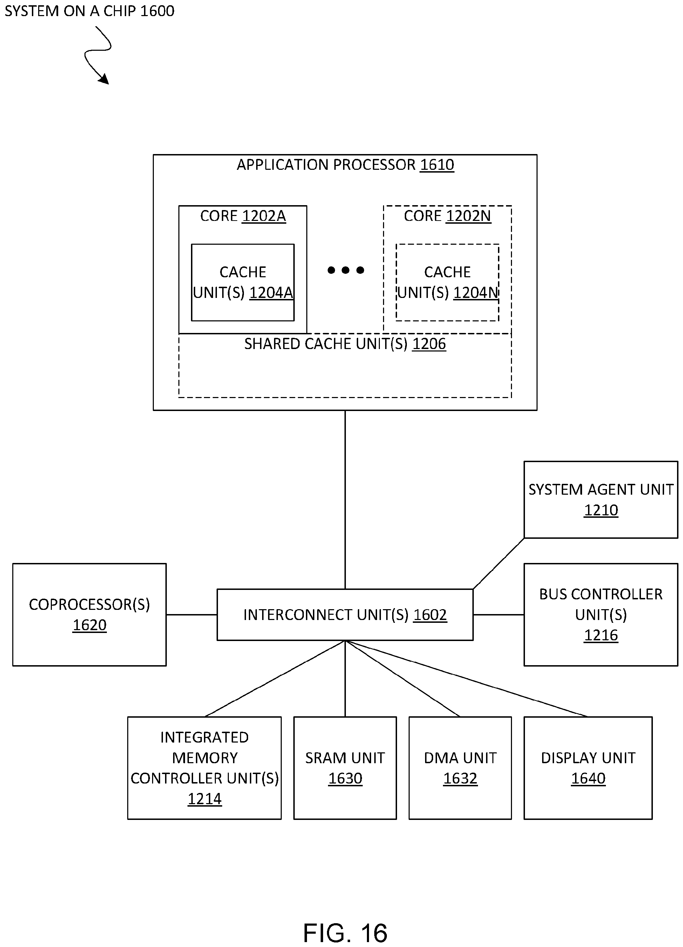

Referring now to FIG. 16, shown is a block diagram of a SoC 1600 in accordance with an embodiment of the present invention. Similar elements in FIG. 12 bear like reference numerals. Also, dashed lined boxes are optional features on more advanced SoCs. In FIG. 16, an interconnect unit(s) 1602 is coupled to: an application processor 1610 which includes a set of one or more cores 1202A-N and shared cache unit(s) 1206; a system agent unit 1210; a bus controller unit(s) 1216; an integrated memory controller unit(s) 1214; a set or one or more coprocessors 1620 which may include integrated graphics logic, an image processor, an audio processor, and a video processor; an static random access memory (SRAM) unit 1630; a direct memory access (DMA) unit 1632; and a display unit 1640 for coupling to one or more external displays. In one embodiment, the coprocessor(s) 1620 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1430 illustrated in FIG. 14, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

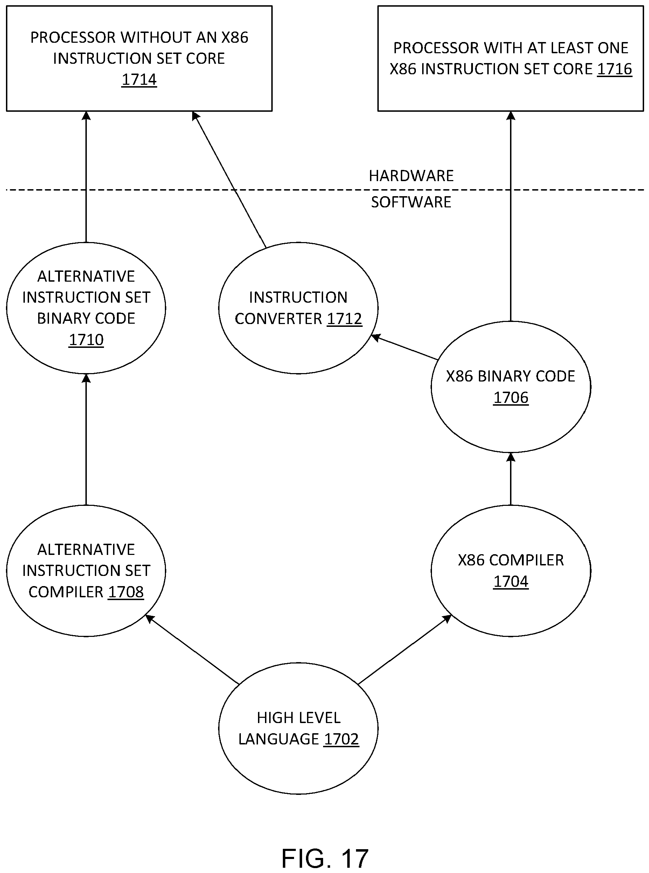

FIG. 17 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 17 shows a program in a high level language 1702 may be compiled using an x86 compiler 1704 to generate x86 binary code 1706 that may be natively executed by a processor with at least one x86 instruction set core 1716. The processor with at least one x86 instruction set core 1716 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1704 represents a compiler that is operable to generate x86 binary code 1706 (e.g., object code) that can, with or without additional linkage processing, be executed on the processor with at least one x86 instruction set core 1716. Similarly, FIG. 17 shows the program in the high level language 1702 may be compiled using an alternative instruction set compiler 1708 to generate alternative instruction set binary code 1710 that may be natively executed by a processor without at least one x86 instruction set core 1714 (e.g., a processor with cores that execute the MIPS instruction set of MIPS Technologies of Sunnyvale, CA and/or that execute the ARM instruction set of ARM Holdings of Sunnyvale, CA). The instruction converter 1712 is used to convert the x86 binary code 1706 into code that may be natively executed by the processor without an x86 instruction set core 1714. This converted code is not likely to be the same as the alternative instruction set binary code 1710 because an instruction converter capable of this is difficult to make; however, the converted code will accomplish the general operation and be made up of instructions from the alternative instruction set. Thus, the instruction converter 1712 represents software, firmware, hardware, or a combination thereof that, through emulation, simulation or any other process, allows a processor or other electronic device that does not have an x86 instruction set processor or core to execute the x86 binary code 1706.

Techniques and architectures for executing an instruction with a virtual machine are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

In one or more first embodiments, a processor comprises first circuitry to execute a hypervisor process, second circuitry, coupled to the first circuitry, to identify to the hypervisor process an availability of a control parameter which is to determine whether an execution of an instruction with a virtual machine (VM) is to result in a switch by the processor from a flow of the VM to a flow of the hypervisor process, wherein the execution of the instruction is to identify to the VM a hardware characteristic of the processor, and third circuitry, coupled to the first circuitry, to write a value to a repository of the control parameter, the value based on an indication, from the hypervisor process, of whether a resource of the VM is authorized to avail of a host passthrough functionality of the processor.

In one or more second embodiments, further to the first embodiment, the control parameter is a first control parameter, the instruction is a first instruction, the VM is a first VM, the switch is a first switch, the value is a first value, the indication is a first indication, and the resource is a first resource, wherein the second circuitry is further to identify to the hypervisor process an availability of a second control parameter which is to determine whether an execution of a second instruction with a second VM is to result in a second switch by the processor from a flow of the second VM to a flow of the hypervisor process, wherein the execution of the second instruction is to identify the hardware characteristic to the second VM, and wherein the third circuitry is further to write a second value to a repository of the second control parameter, the second value based on a second indication, from the hypervisor process, of whether a second resource of the second VM is authorized to avail of the host passthrough functionality.

In one or more third embodiments, further to the first embodiment or the second embodiment, the instruction is a first instruction, the VM is a first VM, the switch is a first switch, and the flow is a first flow, and wherein the control parameter which is further to determine whether an execution of a second instruction with a second VM is to result in a second switch by the processor from a second flow of the second VM to the flow of the hypervisor process, wherein the execution of the second instruction is to identify the hardware characteristic to the second VM

In one or more fourth embodiments, further to any of the first through third embodiments, the instruction is a central processing unit identification (CPUID) instruction of an Intel x86 instruction set.

In one or more fifth embodiments, a method at a processor, the method comprises executing a hypervisor process, identifying to the hypervisor process an availability of a control parameter which is to determine whether an execution of an instruction with a virtual machine (VM) is to result in a switch by the processor from a flow of the VM to a flow of the hypervisor process, wherein the execution of the instruction is to identify to the VM a hardware characteristic of the processor, and writing a value to a repository of the control parameter, the value based on an indication, from the hypervisor process, of whether a resource of the VM is authorized to avail of a host passthrough functionality of the processor.

In one or more sixth embodiments, further to the fifth embodiment, the control parameter is a first control parameter, the instruction is a first instruction, the VM is a first VM, the switch is a first switch, the value is a first value, the indication is a first indication, and the resource is a first resource, wherein the method further comprises identifying to the hypervisor process an availability of a second control parameter which is to determine whether an execution of a second instruction with a second VM is to result in a second switch by the processor from a flow of the second VM to a flow of the hypervisor process, wherein the execution of the second instruction is to identify the hardware characteristic to the second VM, and writing a second value to a repository of the second control parameter, the second value based on a second indication, from the hypervisor process, of whether a second resource of the second VM is authorized to avail of the host passthrough functionality.

In one or more seventh embodiments, further to the fifth embodiment or the sixth embodiment, the instruction is a first instruction, the VM is a first VM, the switch is a first switch, and the flow is a first flow, and wherein the control parameter which is further to determine whether an execution of a second instruction with a second VM is to result in a second switch by the processor from a second flow of the second VM to the flow of the hypervisor process, wherein the execution of the second instruction is to identify the hardware characteristic to the second VM

In one or more eighth embodiments, further to any of the fifth through seventh embodiments, the instruction is a central processing unit identification (CPUID) instruction of an Intel x86 instruction set.

In one or more ninth embodiments, a system comprises a memory to store first state of a hypervisor process, and second state of a virtual machine (VM) which is to be provided with the hypervisor process, a processor coupled to the memory, the processor comprising first circuitry to execute the hypervisor process, second circuitry, coupled to the first circuitry, to identify to the hypervisor process an availability of a control parameter which is to determine whether an execution of an instruction with the VM is to result in a switch by the processor from a flow of the VM to a flow of the hypervisor process, wherein the execution of the instruction is to identify to the VM a hardware characteristic of the processor, and third circuitry, coupled to the first circuitry, to write a value to a repository of the control parameter, the value based on an indication, from the hypervisor process, of whether a resource of the VM is authorized to avail of a host passthrough functionality of the processor. The system further comprises a display device coupled to the processor and to the memory, the display device to display an image based on the flow of the VM

In one or more tenth embodiments, further to the ninth embodiment, the control parameter is a first control parameter, the instruction is a first instruction, the VM is a first VM, the switch is a first switch, the value is a first value, the indication is a first indication, and the resource is a first resource, wherein the second circuitry is further to identify to the hypervisor process an availability of a second control parameter which is to determine whether an execution of a second instruction with a second VM is to result in a second switch by the processor from a flow of the second VM to a flow of the hypervisor process, wherein the execution of the second instruction is to identify the hardware characteristic to the second VM, and wherein the third circuitry is further to write a second value to a repository of the second control parameter, the second value based on a second indication, from the hypervisor process, of whether a second resource of the second VM is authorized to avail of the host passthrough functionality.

In one or more eleventh embodiments, further to the ninth embodiment or the tenth embodiment, the instruction is a first instruction, the VM is a first VM, the switch is a first switch, and the flow is a first flow, and wherein the control parameter which is further to determine whether an execution of a second instruction with a second VM is to result in a second switch by the processor from a second flow of the second VM to the flow of the hypervisor process, wherein the execution of the second instruction is to identify the hardware characteristic to the second VM

In one or more twelfth embodiments, further to any of the ninth through eleventh embodiments, the instruction is a central processing unit identification (CPUID) instruction of an Intel x86 instruction set.

In one or more thirteenth embodiments, one or more non-transitory computerreadable storage media having stored thereon instructions which, when executed by one or more processing units, cause the one or more processing units to perform a method comprising detecting an instruction to be executed with a virtual machine (VM) which is provided with a hypervisor process, wherein a processor executes the hypervisor process, based on the instruction, accessing a control parameter which corresponds to a resource of the VM, wherein the control parameter indicates whether the resource is authorized to avail of a host passthrough functionality of the processor, and determining, based on the control parameter, whether an execution of the instruction is to result in a switch by the processor from a flow of the VM to a flow of the hypervisor process, wherein the execution of the instruction is to identify to the VM a hardware characteristic of the processor.

In one or more fourteenth embodiments, further to the thirteenth embodiment, determining whether the execution of the instruction is to result in the switch comprises performing a search to determine whether a memory region, which is shared by the VM and the hypervisor process, stores information which identifies the hardware characteristic, and where a failure of the search is indicated, determining, based on the control parameter, whether the resource of the VM is authorized to avail of the host passthrough functionality.

In one or more fifteenth embodiments, further to the fourteenth embodiment, the method further comprises where the failure of the search is indicated and the resource of the VM is authorized to avail of the host passthrough functionality, signaling the processor to communicate the information to the VM via a host passthrough.

In one or more sixteenth embodiments, further to the fifteenth embodiment, the execution of the instruction further results in the information being stored to the memory region.

In one or more seventeenth embodiments, further to the fourteenth embodiment, the method further comprises where the failure of the search is indicated and the resource of the VM is unauthorized to avail of the host passthrough functionality, generating a signal to initiate the switch from the flow of the VM to the flow of the hypervisor process.

In one or more eighteenth embodiments, further to the fourteenth embodiment, the method further comprises where a success of the search is indicated, providing a result of the execution based on an access of the information in the memory region.

In one or more nineteenth embodiments, further to the thirteenth embodiment or the fourteenth embodiment, the instruction is a first instruction, the VM is a first VM, the control parameter is a first control parameter, the resource is a first resource, and the switch is a first switch, wherein the method further comprises detecting a second instruction to be executed with a second VM which is provided with the hypervisor process, based on the second instruction, accessing a second control parameter which corresponds to a second resource of the second VM, wherein the second control parameter indicates whether the second resource is authorized to avail of the host passthrough functionality, and determining, based on the second control parameter, whether an execution of the second instruction is to result in a second switch by the processor from a flow of the second VM to the flow of the hypervisor process, wherein the execution of the second instruction is to identify to the second VM the hardware characteristic of the processor.

In one or more twentieth embodiments, further to any of the thirteenth, fourteenth or nineteenth embodiments, the instruction is a first instruction, the VM is a first VM, the resource is a first resource, and the switch is a first switch, the method further comprises detecting a second instruction to be executed with a second VM which is provided with the hypervisor process, accessing the control parameter based on the second instruction, wherein the control parameter further indicates whether a second resource of the second VM is authorized to avail of the host passthrough functionality, and determining, based on the control parameter, whether an execution of the second instruction is to result in a second switch by the processor from a flow of the second VM to the flow of the hypervisor process, wherein the execution of the second instruction is to identify to the second VM the hardware characteristic of the processor.

In one or more twenty-first embodiments, further to any of the thirteenth, fourteenth, nineteenth, or twentieth embodiments, the instruction is a central processing unit identification (CPUID) instruction of an Intel x86 instruction set.

In one or more twenty-second embodiments, further to any of the thirteenth, fourteenth, nineteenth, twentieth, or twenty-first embodiments, the hypervisor process is a guest hypervisor process which is provided with a host hypervisor process.

In one or more twenty-third embodiments, a method comprises detecting an instruction to be executed with a virtual machine (VM) which is provided with a hypervisor process, wherein a processor executes the hypervisor process, based on the instruction, accessing a control parameter which corresponds to a resource of the VM, wherein the control parameter indicates whether the resource is authorized to avail of a host passthrough functionality of the processor, and determining, based on the control parameter, whether an execution of the instruction is to result in a switch by the processor from a flow of the VM to a flow of the hypervisor process, wherein the execution of the instruction is to identify to the VM a hardware characteristic of the processor.

In one or more twenty-fourth embodiments, further to the twenty-third embodiment, determining whether the execution of the instruction is to result in the switch comprises performing a search to determine whether a memory region, which is shared by the VM and the hypervisor process, stores information which identifies the hardware characteristic, and where a failure of the search is indicated, determining, based on the control parameter, whether the resource of the VM is authorized to avail of the host passthrough functionality.

In one or more twenty-fifth embodiments, further to the twenty-fourth embodiment, the method further comprises where the failure of the search is indicated and the resource of the VM is authorized to avail of the host passthrough functionality, signaling the processor to communicate the information to the VM via a host passthrough.

In one or more twenty-sixth embodiments, further to the twenty-fifth embodiment, the execution of the instruction further results in the information being stored to the memory region.

In one or more twenty-seventh embodiments, further to the twenty-fourth embodiment, the method further comprises where the failure of the search is indicated and the resource of the VM is unauthorized to avail of the host passthrough functionality, generating a signal to initiate the switch from the flow of the VM to the flow of the hypervisor process.

In one or more twenty-eighth embodiments, further to the twenty-fourth embodiment, the method further comprises where a success of the search is indicated, providing a result of the execution based on an access of the information in the memory region.

In one or more twenty-ninth embodiments, further to the twenty-third embodiment or the twenty-fourth embodiment, the instruction is a first instruction, the VM is a first VM, the control parameter is a first control parameter, the resource is a first resource, and the switch is a first switch, wherein the method further comprises detecting a second instruction to be executed with a second VM which is provided with the hypervisor process, based on the second instruction, accessing a second control parameter which corresponds to a second resource of the second VM, wherein the second control parameter indicates whether the second resource is authorized to avail of the host passthrough functionality, and determining, based on the second control parameter, whether an execution of the second instruction is to result in a second switch by the processor from a flow of the second VM to the flow of the hypervisor process, wherein the execution of the second instruction is to identify to the second VM the hardware characteristic of the processor.

In one or more thirtieth embodiments, further to any of the twenty-third, twenty-fourth, or twenty-ninth embodiments, the instruction is a first instruction, the VM is a first VM, the resource is a first resource, and the switch is a first switch, the method further comprises detecting a second instruction to be executed with a second VM which is provided with the hypervisor process, accessing the control parameter based on the second instruction, wherein the control parameter further indicates whether a second resource of the second VM is authorized to avail of the host passthrough functionality, and determining, based on the control parameter, whether an execution of the second instruction is to result in a second switch by the processor from a flow of the second VM to the flow of the hypervisor process, wherein the execution of the second instruction is to identify to the second VM the hardware characteristic of the processor.

In one or more thirty-first embodiments, further to any of the twenty-third, twenty-fourth, twenty-ninth, or thirtieth embodiments, the instruction is a central processing unit identification (CPUID) instruction of an Intel x86 instruction set.

In one or more thirty-second embodiments, further to any of the twenty-third, twenty-fourth, twenty-ninth, thirtieth, or thirty-first embodiments, the hypervisor process is a guest hypervisor process which is provided with a host hypervisor process.

In one or more thirty-third embodiments, one or more non-transitory computerreadable storage media having stored thereon instructions which, when executed by one or more processing units, cause the one or more processing units to perform a method comprising providing a virtual machine (VM) which is to execute a host operating system, detecting an availability of a control parameter which is to determine whether an execution of an instruction with the VM is to result in a switch by a processor from a flow of the VM to a flow of a hypervisor process, wherein the execution of the instruction is to identify to the VM a hardware characteristic of the processor, based on the availability, making a determination of whether a resource of the VM is to be authorized to avail of a host passthrough functionality of the processor, and signaling the processor to set the control parameter to a value based on the determination.

In one or more thirty-fourth embodiments, further to the thirty-third embodiment, the VM is a first VM, the host operating system is a first host operating system, the control parameter is a first control parameter, the instruction is a first instruction, the switch is a first switch, and the resource is a first resource, wherein the method further comprises providing a second VM which is to execute a second host operating system, detecting an availability of a second control parameter which is to determine whether an execution of a second instruction with the second VM is to result in a switch by a processor from a flow of the second VM to the flow of the hypervisor process, wherein the execution of the instruction is to identify the hardware characteristic to the second VM, based on the availability of the second control parameter, making a second determination of whether a second resource of the second VM is to be authorized to avail of the host passthrough functionality, and signaling the processor to set the second control parameter to a second value based on the second determination.

In one or more thirty-fifth embodiments, further to the thirty-third embodiment or the thirty-fourth embodiment, the VM is a first VM, the host operating system is a first host operating system, the instruction is a first instruction, the switch is a first switch, and the resource is a first resource, wherein the method further comprises providing a second VM which is to execute a second host operating system, wherein the control parameter is further to determine whether an execution of a second instruction with the second VM is to result in a switch by the processor from a flow of the second VM to the flow of the hypervisor process, wherein the execution of the second instruction is to identify the hardware characteristic to the second VM, based on the availability of the control parameter, making a second determination of whether a second resource of the second VM is to be authorized to avail of the host passthrough functionality, and signaling the processor to set the second control parameter to a second value based on the second determination.

In one or more thirty-sixth embodiments, further to any of the thirty-third through thirty-fifth embodiments, the instruction is a central processing unit identification (CPUID) instruction of an Intel x86 instruction set.

In one or more thirty-seventh embodiments, a method comprises providing a virtual machine (VM) which is to execute a host operating system, detecting an availability of a control parameter which is to determine whether an execution of an instruction with the VM is to result in a switch by a processor from a flow of the VM to a flow of a hypervisor process, wherein the execution of the instruction is to identify to the VM a hardware characteristic of the processor, based on the availability, making a determination of whether a resource of the VM is to be authorized to avail of a host passthrough functionality of the processor, and signaling the processor to set the control parameter to a value based on the determination.

In one or more thirty-eighth embodiments, further to the thirty-seventh embodiment, the VM is a first VM, the host operating system is a first host operating system, the control parameter is a first control parameter, the instruction is a first instruction, the switch is a first switch, and the resource is a first resource, wherein the method further comprises providing a second VM which is to execute a second host operating system, detecting an availability of a second control parameter which is to determine whether an execution of a second instruction with the second VM is to result in a switch by a processor from a flow of the second VM to the flow of the hypervisor process, wherein the execution of the instruction is to identify the hardware characteristic to the second VM, based on the availability of the second control parameter, making a second determination of whether a second resource of the second VM is to be authorized to avail of the host passthrough functionality, and signaling the processor to set the second control parameter to a second value based on the second determination.

In one or more thirty-ninth embodiments, further to the thirty-seventh embodiment or the thirty-eighth embodiment, the VM is a first VM, the host operating system is a first host operating system, the instruction is a first instruction, the switch is a first switch, and the resource is a first resource, wherein the method further comprises providing a second VM which is to execute a second host operating system, wherein the control parameter is further to determine whether an execution of a second instruction with the second VM is to result in a switch by the processor from a flow of the second VM to the flow of the hypervisor process, wherein the execution of the second instruction is to identify the hardware characteristic to the second VM, based on the availability of the control parameter, making a second determination of whether a second resource of the second VM is to be authorized to avail of the host passthrough functionality, and signaling the processor to set the second control parameter to a second value based on the second determination.

In one or more fortieth embodiments, further to any of the thirty-seventh through thirty-ninth embodiments, the instruction is a central processing unit identification (CPUID) instruction of an Intel x86 instruction set.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A processor comprising:
first circuitry to execute a hypervisor process;
second circuitry, coupled to the first circuitry, to identify to the hypervisor process an availability of a control parameter which is to determine whether an execution of an instruction with a virtual machine (VM) is to result in a switch by the processor from a flow of the VM to a flow of the hypervisor process, wherein the execution of the instruction is to identify to the VM a hardware characteristic of the processor; and
third circuitry, coupled to the first circuitry, to write a value to a repository of the control parameter, the value based on an indication, from the hypervisor process, of whether a resource of the VM is authorized to avail of a host passthrough functionality of the processor.

2. The device of claim 1, wherein the control parameter is a first control parameter, the instruction is a first instruction, the VM is a first VM, the switch is a first switch, the value is a first value, the indication is a first indication, and the resource is a first resource;
wherein the second circuitry is further to identify to the hypervisor process an availability of a second control parameter which is to determine whether an execution of a second instruction with a second VM is to result in a second switch by the processor from a flow of the second VM to a flow of the hypervisor process, wherein the execution of the second instruction is to identify the hardware characteristic to the second VM; and
wherein the third circuitry is further to write a second value to a repository of the second control parameter, the second value based on a second indication, from the hypervisor process, of whether a second resource of the second VM is authorized to avail of the host passthrough functionality.

3. The device of either of claim 1 or claim 2, wherein the instruction is a first instruction, the VM is a first VM, the switch is a first switch, and the flow is a first flow; and
wherein the control parameter which is further to determine whether an execution of a second instruction with a second VM is to result in a second switch by the processor from a second flow of the second VM to the flow of the hypervisor process, wherein the execution of the second instruction is to identify the hardware characteristic to the second VM

4. The device of any of claim 1 through claim 3, wherein the instruction is a central processing unit identification (CPUID) instruction of an Intel x86 instruction set.

5. A method comprising:
detecting an instruction to be executed with a virtual machine (VM) which is provided with a hypervisor process, wherein a processor executes the hypervisor process;
based on the instruction, accessing a control parameter which corresponds to a resource of the VM, wherein the control parameter indicates whether the resource is authorized to avail of a host passthrough functionality of the processor; and
determining, based on the control parameter, whether an execution of the instruction is to result in a switch by the processor from a flow of the VM to a flow of the hypervisor process, wherein the execution of the instruction is to identify to the VM a hardware characteristic of the processor.

6. The method of claim 5, wherein determining whether the execution of the instruction is to result in the switch comprises:
performing a search to determine whether a memory region, which is shared by the VM and the hypervisor process, stores information which identifies the hardware characteristic; and
where a failure of the search is indicated, determining, based on the control parameter, whether the resource of the VM is authorized to avail of the host passthrough functionality.

7. The method of claim 6, the method further comprising:
where the failure of the search is indicated and the resource of the VM is authorized to avail of the host passthrough functionality, signaling the processor to communicate the information to the VM via a host passthrough.

8. The method of claim 7, wherein the execution of the instruction further results in the information being stored to the memory region.

9. The method of claim 6, the method further comprising:
where the failure of the search is indicated and the resource of the VM is unauthorized to avail of the host passthrough functionality, generating a signal to initiate the switch from the flow of the VM to the flow of the hypervisor process.

10. The method of claim 6, the method further comprising:
where a success of the search is indicated, providing a result of the execution based on an access of the information in the memory region.

11. The method of either of claim 5 or claim 6, wherein the instruction is a first instruction, the VM is a first VM, the control parameter is a first control parameter, the resource is a first resource, and the switch is a first switch, the method further comprising:
detecting a second instruction to be executed with a second VM which is provided with the hypervisor process;
based on the second instruction, accessing a second control parameter which corresponds to a second resource of the second VM, wherein the second control parameter indicates whether the second resource is authorized to avail of the host passthrough functionality; and
determining, based on the second control parameter, whether an execution of the second instruction is to result in a second switch by the processor from a flow of the second VM to the flow of the hypervisor process, wherein the execution of the second instruction is to identify to the second VM the hardware characteristic of the processor.

12. The method of either of claim 5 or claim 6, wherein the instruction is a first instruction, the VM is a first VM, the resource is a first resource, and the switch is a first switch, the method further comprising:
detecting a second instruction to be executed with a second VM which is provided with the hypervisor process;
accessing the control parameter based on the second instruction, wherein the control parameter further indicates whether a second resource of the second VM is authorized to avail of the host passthrough functionality; and
determining, based on the control parameter, whether an execution of the second instruction is to result in a second switch by the processor from a flow of the second VM to the flow of the hypervisor process, wherein the execution of the second instruction is to identify to the second VM the hardware characteristic of the processor.

13. The method of either of claim 5 or claim 6, wherein the instruction is a central processing unit identification (CPUID) instruction of an Intel x86 instruction set.

14. The method of either of claim 5 or claim 6, wherein the hypervisor process is a guest hypervisor process which is provided with a host hypervisor process.

15. Machine-readable storage including machine-readable instructions, when executed, to implement a method or realize a processor as claimed in any preceding claim.
